# EUROPEAN PATENT SPECIFICATION

(11) **EP 4 150 253 B1**
(45) Date of publication and mention of the grant of the patent: **03.04.2024**
(21) Application number: 21732113.2
(22) Date of filing: 12.05.2021
(51) Int. Cl.: F23C 9/00, F27B 3/20, F27B 9/36, F27D 99/00, F23D 14/02, F23D 14/48

(54) **BURNER AND METHOD FOR THE FIRING OF CERAMIC ARTICLES**
BRENNER UND VERFAHREN ZUM BRENNEN VON KERAMIKTEILEN
BRÛLEUR ET PROCÉDÉ DE CUISSON D'OBJETS EN CÉRAMIQUE

(30) Priority: 12.05.2020 IT 202000010738; 15.01.2021 IT 202100000695
(43) Date of publication of application: 22.03.2023
(73) Proprietor: Sacmi Forni & Filter S.p.A., 40026 Imola (BO) (IT)
(72) Inventor: TORO, Alberto, 40026 Imola (BO) (IT)
(74) Representative: Studio Torta S.p.A.
(86) International application number: PCT/IB2021/054056
(87) International publication number: WO 2021/229468

(56) References cited:
- EP-A1- 1 217 297
- EP-A1- 3 155 320

## Description

### CROSS-REFERENCE TO RELATED APPLICATIONS

This patent application claims priority from Italian patent application no. 102020000010738 filed on 12/05/2020 and Italian patent application no. 102021000000695 filed on 15/01/2021.

### TECHNICAL FIELD

The present invention concerns a burner and a method for the firing of ceramic articles. In particular, the present invention is advantageously but not exclusively applied in the firing of ceramic articles to obtain tiles, to which the following description will explicitly refer without loss of generality.

### BACKGROUND OF THE INVENTION

The firing of ceramic articles to obtain tiles is generally carried out in tunnel kilns, delimited by two opposite walls and a roof. These kilns are usually heated by two sets of burners, each arranged on one side of the tunnel.

Typically, the methane gas-operated burners are located on the lateral walls of the tunnel on several levels and face the opposite wall.

The firing cycle of the ceramic articles is designed with great precision and entails: heating of the ceramic articles at the kiln entrance, residence of said articles inside the firing chamber at a predefined temperature and controlled cooling prior to reaching the kiln exit.

Usually, the ceramic articles are transported on a large conveyor consisting of a set of ceramic rollers. Consequently, it is important to guarantee that the temperature inside the firing chamber is uniform throughout the width of the kiln.

For this purpose, different types of industrial burners have been developed, and different arrangements of the burners inside complex apparatus, to obtain an increasingly constant temperature inside the firing chamber.

However, especially in very wide tunnel kilns, non-uniform distribution of the temperature generally occurs in the different longitudinal sections, with local temperature peaks determined according to the position of the burners. In particular, in many cases temperatures are higher in the centre of the tunnel and lower near the lateral walls.

This non-uniform temperature inevitably results in firing defects in the ceramic articles travelling near the walls of the tunnel. In particular, the defects can be both dimensional and shape defects, such as lack of planarity. This results in an increase in the number of discarded articles.

Usually, this temperature difference, between the centre of the kiln and the areas near the lateral walls, is due to the fact that the fumes circulating inside the firing chamber slow down near the walls, the turbulence of said fumes is reduced and consequently also the heat exchange coefficient.

In addition, as previously said, the ceramic burners of a known type are substantially supplied with fossil fuels (methane, LPG) which although on the one hand allow reduction in the emissions of NOx through normal combustion, on the other entail an anti-ecological use of non-renewable resources.

The document EP3155320 describes a burner for an industrial kiln, which can be installed in a kiln comprising at least one firing chamber and comprising a main tubular body provided with at least one first port for the inlet of a fuel and at least one second port for the inlet of the oxidizer, and with an end nozzle provided with an outlet facing the firing chamber, and elements for triggering combustion of the fuel-oxidizer mixture. The burner further comprises at least one duct, obtained between a second tubular element and the wall of the kiln, adapted to withdraw a portion of the gases present inside the firing chamber and convey them to the outlet of the end nozzle.

The document EP1217297 describes a burner for a gas turbine comprising a conical premixer.

The object of the present invention is to provide a burner and a method which overcome, at least partially, the drawbacks of the known art and at the same time are easy and inexpensive to produce.

### SUMMARY

The scope of the present invention is defined by independent claims 1 and 14, and further embodiments of the invention are specified in dependent claims 2-13 and 15.

### BRIEF DESCRIPTION OF THE DRAWINGS

The present invention will now be described with reference to the attached drawings, which illustrate some non-limiting embodiment examples thereof, in which:
- figure 1 is a front view in section of a first embodiment of an apparatus according to the further embodiment of the present invention;
- figure 2 is a schematic plan view of a section of a second embodiment of an apparatus in accordance with the further embodiment of the present invention;
- figure 3 is a schematic perspective view of part of the apparatus of figure 1 comprising a burner in accordance with the further embodiment of the present invention;
- figures 4 and 4a are front views in section of two different embodiments of the part of figure 3;
- figures 5 and 5a are front views in section of two different embodiments of a part of the apparatus of figure 2 comprising a further burner in accordance with the present invention;
- figures 6 and 6a are perspective schematic views of a part of the burner of figure 4 and 4a respectively;
- figures 7 and 7a are views in longitudinal section and in detail of the burner of the part of figure 6 and 6a respectively;
- figures 8 and 8a are front views in section of a combustion head of the burner of figure 6 and 6a respectively;
- figures 9 and 10 are two front views in section of part of the combustion head of figures 8 and 8a;
- figure 11 is a perspective schematic view of a part of a burner in accordance with the present invention;
- figure 12 is a lateral view in section of a part of the discharge body of figure 11; and
- figures 13 and 13a are two graphs that illustrate the temperature variation according to the distance from a wall of the kiln (the distance is shown on the X axis and the temperature on the Y axis).

### DETAILED DISCLOSURE

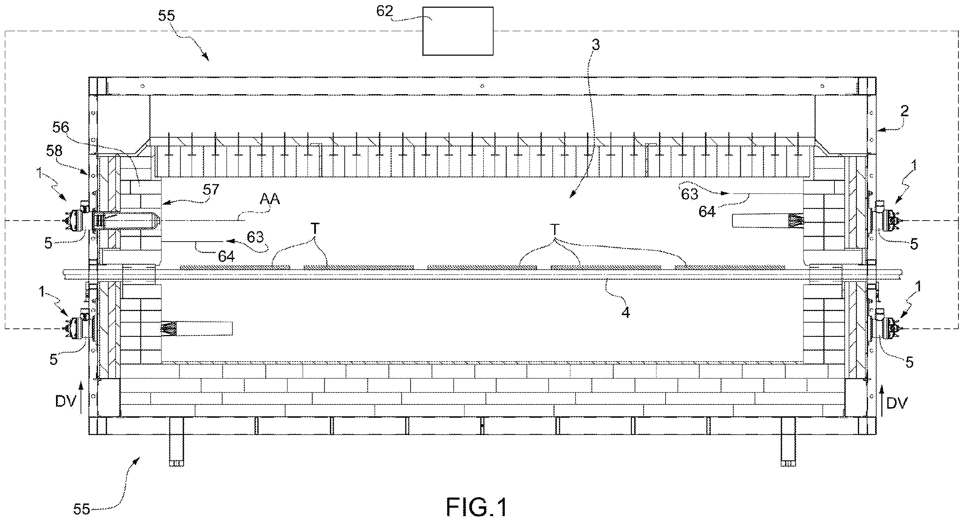

In figure 1, the number 1 indicates overall a burner for firing ceramic articles T in accordance with a first aspect of the present invention.

The burner 1 can be preferably but not necessarily installed in an industrial kiln 2, in particular a tunnel kiln, comprising a firing chamber 3.

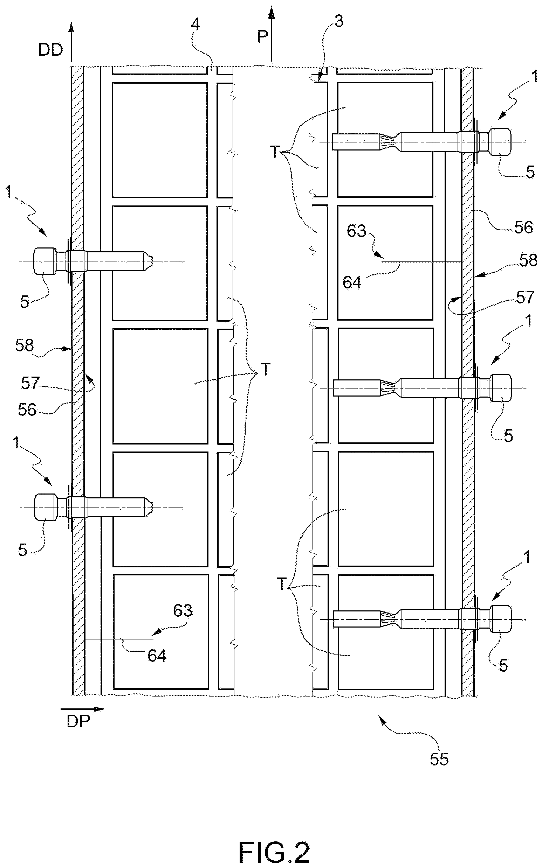

In particular, as illustrated in figures 1 and 2, the ceramic articles T are moved by a transport system 4 along a conveying path P.

More precisely, the ceramic articles T are any type of ceramic article requiring at least one firing in a kiln.

In the non-limiting embodiment of figures 1 and 2, the transport system 4 comprises a conveyor belt, on which the green ceramic articles T to be fired are arranged, preferably in an orderly manner.

According to some non-limiting embodiments not illustrated, the transport system 4 comprises a plurality of ceramic rollers (if necessary, also moved at different speeds to differentiate firing of the articles).

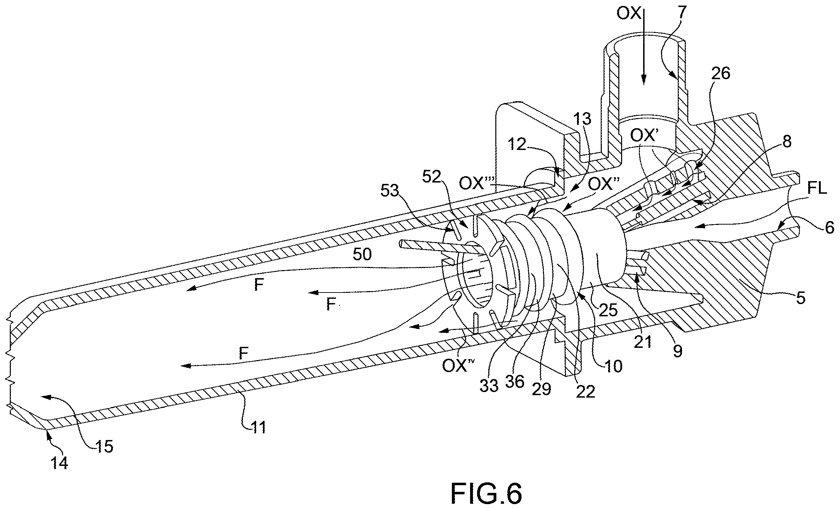

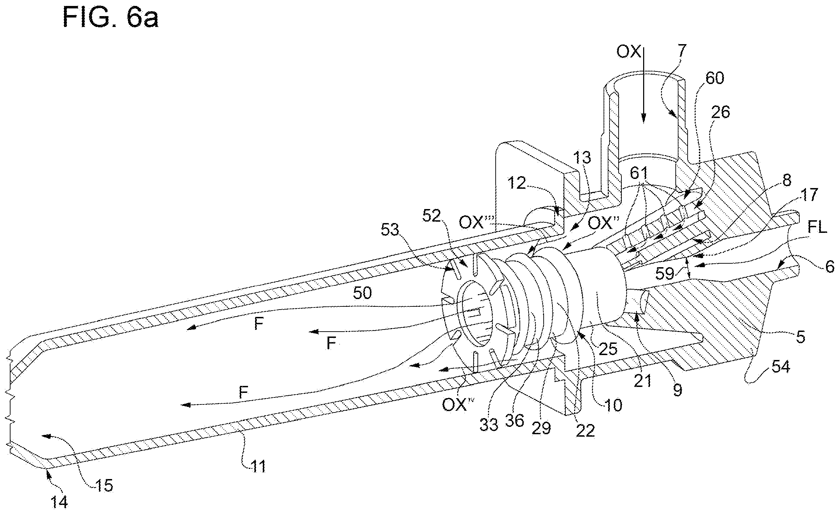

As illustrated in figures 1 to 6a, the burner 1 comprises a mixing body 5, which in turn comprises a duct 6 to supply a fuel FL comprising a percentage of hydrogen, an oxidizer supply duct 7, a trigger device 8 to start a combustion and a flame detection device 9. The burner further comprises a combustion head 10. In other words, the mixing body 5 is the part of the burner necessary for generating the mixture of air and gas which (following a trigger so as to obtain a flame) will fire the ceramic articles T inside the kiln 2. In particular, the fuel introduced by means of the fuel supply duct 6 is substantially methane gas, while the oxidizer introduced by means of the oxidizer supply duct 7 is substantially ambient air (with approximately, for example, 21% of oxygen).

The burner 1 further comprises a tubular discharge element 11, which is adapted to (configured to) be passed through by a fluid F flowing out of the mixing body 5 (formed of the mixture of fuel and oxidizer and/or any combustion thereof) and is provided with an end 12 having an opening 13, inside which at least a part of the mixing body 5 (in particular of the combustion head 10) is inserted, and an end 14 opposite the end 12 and having an opening 15.

According to some non-limiting embodiments, the mixing body 5 is coupled with the tubular discharge element 11 by means of fastening elements.

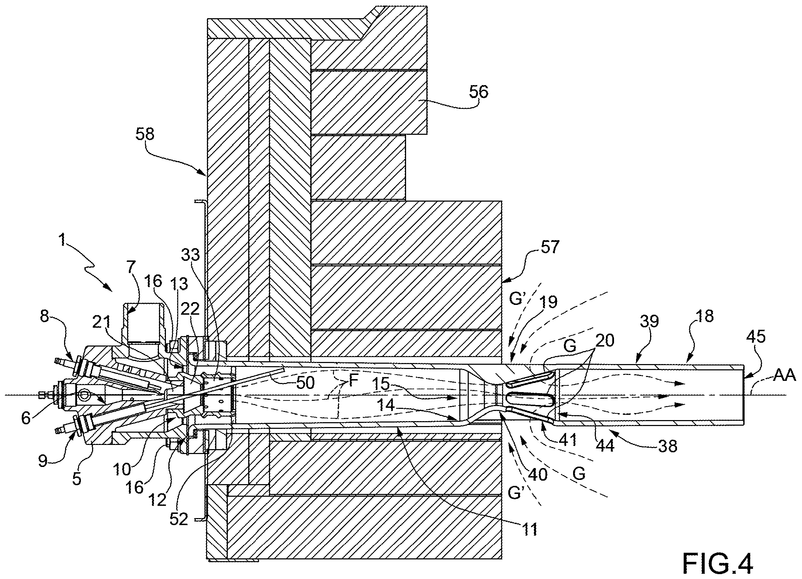

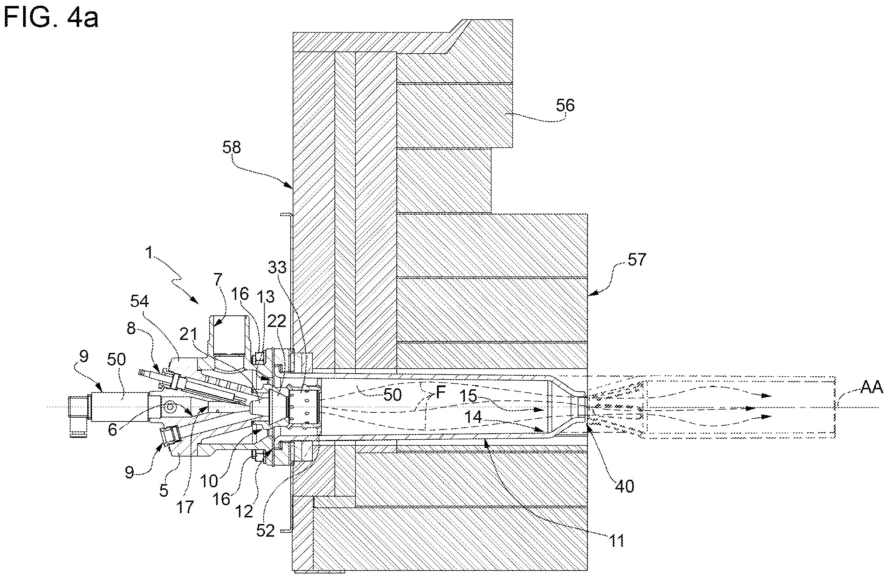

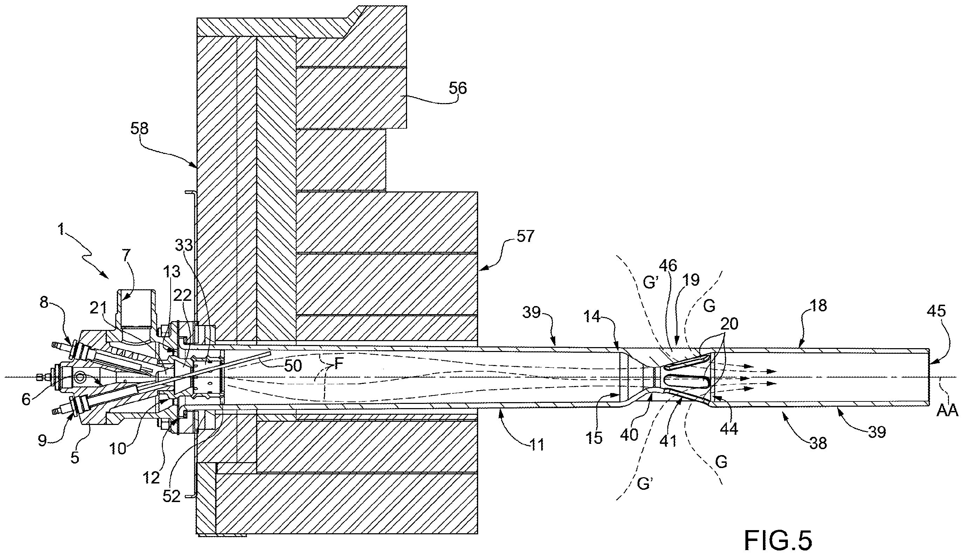

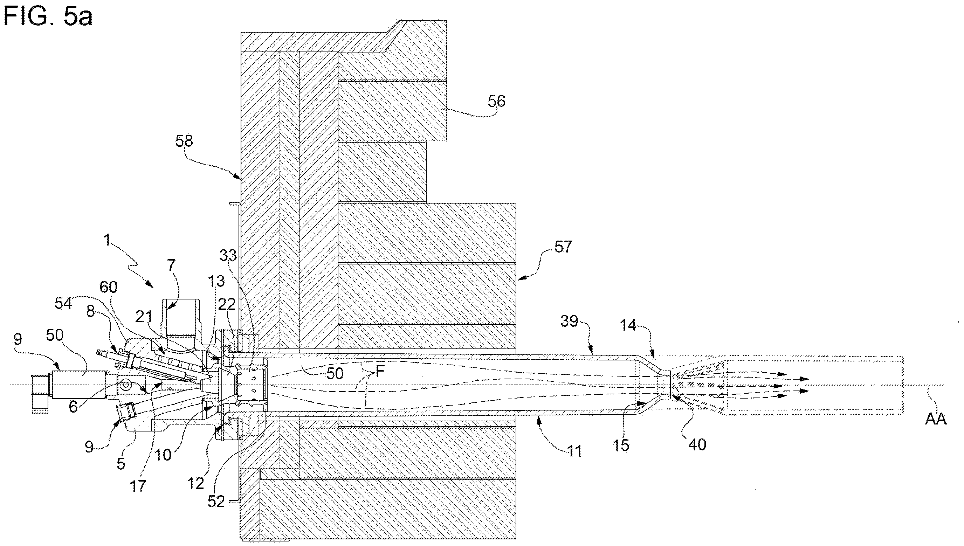

Advantageously but not necessarily, as in the embodiment illustrated in figures 4, 4a and 5, 5a, the fastening elements are bolts 16.

In the non-limiting embodiment illustrated in figures 4, 4a and 5, 5a, the mixing body 5 is inserted partly inside the discharge element 11 and is partly arranged outside the kiln 2. In particular, in the embodiment of figure 4 the discharge element 11 is inserted inside a lateral wall 56 of the tunnel kiln 2. More precisely, the discharge element 11 extends completely inside the lateral wall 56.

In the non-limiting embodiment of figures 5, 5a, on the other hand, the discharge element 11 extends throughout the length of the lateral wall 56 partly entering also the firing chamber 3 of the kiln 2.

Advantageously but not necessarily, the burner 1 comprises a tubular discharge element 18 (illustrated, for example, by a broken line in figures 4a and 5a) which extends from the end 14 of the element 11 in a direction opposite to the end 12, namely towards (more precisely the inside of) the firing chamber 3. In other words, the discharge element 18 is arranged on the opposite side of the discharge element 11 with respect to the mixing body 5.

In some non-limiting cases, the burner 1 comprises a suction element 19 which is adapted to (configured to) bring at least part of the gases G, G' present outside the burner 1, in particular outside the discharge element 11 and/or the discharge element 18 (more precisely inside the firing chamber 3), into the tubular discharge element 18 and is provided with a plurality of openings 20 arranged between the element 11 and the tubular discharge element 18.

Advantageously but not necessarily, and as illustrated in the non-limiting embodiments of figures 4, 4a and 5, 5a, the tubular discharge element 14 is (completely) entirely inside the firing chamber 3 and, for example, is coaxial with the tubular discharge element 11. In other words, the longitudinal axis of symmetry AA of the tubular discharge element 18 coincides with the longitudinal axis of symmetry AA of the tubular discharge element 11.

Advantageously and in a completely different manner from the standards used in the ceramics market, the combustion head 10 is a multi-stage combustion head, namely adapted to (configured to) split the formation of the flame into different stages. In this way it is possible to use the air staging technique to increase the flame speed to over 160 m/s, in particular to over 180 m/s, more precisely up to approximately 200 m/s. In fact, the term "high-speed" indicates, specifically with reference to burners, a flame speed higher than or equal to 150 m/s. Advantageously but not necessarily, the combustion head 10 is mounted at least partially inside the tubular discharge element 11 so as to be coaxial with it along the longitudinal axis of symmetry AA of the burner 1.

In the present invention, as illustrated in figures 4 to 10, advantageously, the multi-stage combustion head 10 comprises (at least) one combustion chamber 21, which is adapted to (configured to) generate a first combustion phase of the flame (in particular to generate the so-called flame "root"), and (at least) one combustion chamber 22, communicating with the combustion chamber 21 and adapted to (configured to) generate a second flame combustion phase at the outlet of the combustion chamber 21. In particular, the combustion chambers 21 and 22 are configured to convey the flame at high speed inside the tubular discharge element 11 towards the end 14 and in particular through the suction element 19 towards the tubular discharge element 18.

Advantageously but not necessarily, and as illustrated in the non-limiting embodiments of figures 4 to 8a, the supply duct 6 of the fuel FL comprises a nozzle 17 for introduction of the fuel FL towards the combustion chamber 21. The nozzle 17 has an axial hole 59 with a diameter smaller than 20 mm, in particular smaller than 15 mm, more in particular smaller than or equal to 13.5 mm. In this way, it is possible to increase the above-mentioned percentage of hydrogen in the fuel FL. In particular, the hydrogen determines a much greater backfire than the methane (or LPG) and it has surprisingly been noted that by increasing the supply speed of the fuel FL, the backfire can be appropriately countered, allowing adequate control thereof and at the same time injecting more fluid F into the firing chamber 3.

Advantageously but not necessarily, the nozzle 7 for introduction of the fuel FL is obtained in one piece on a breech 54 (in particular made of aluminium) of the burner 1.

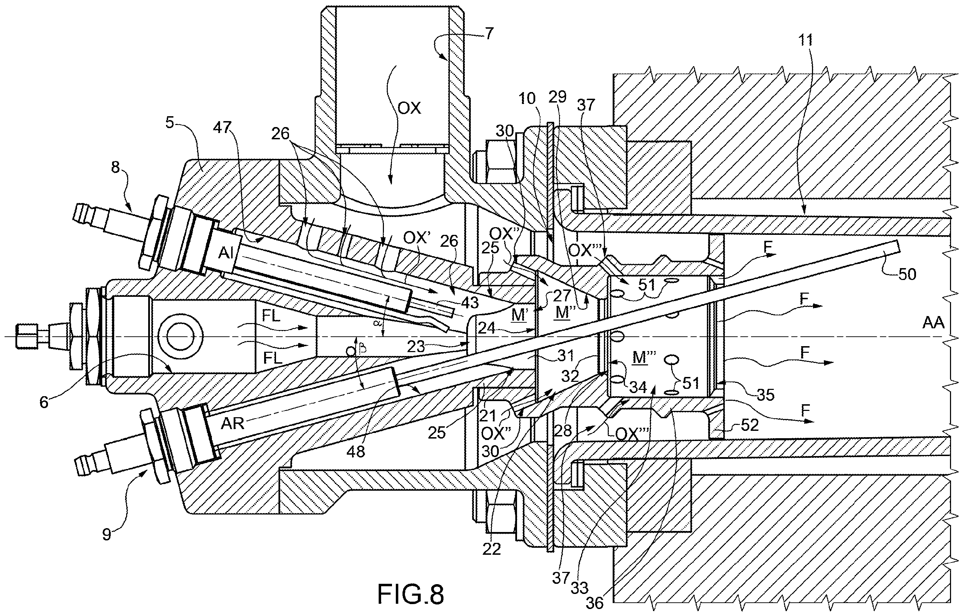

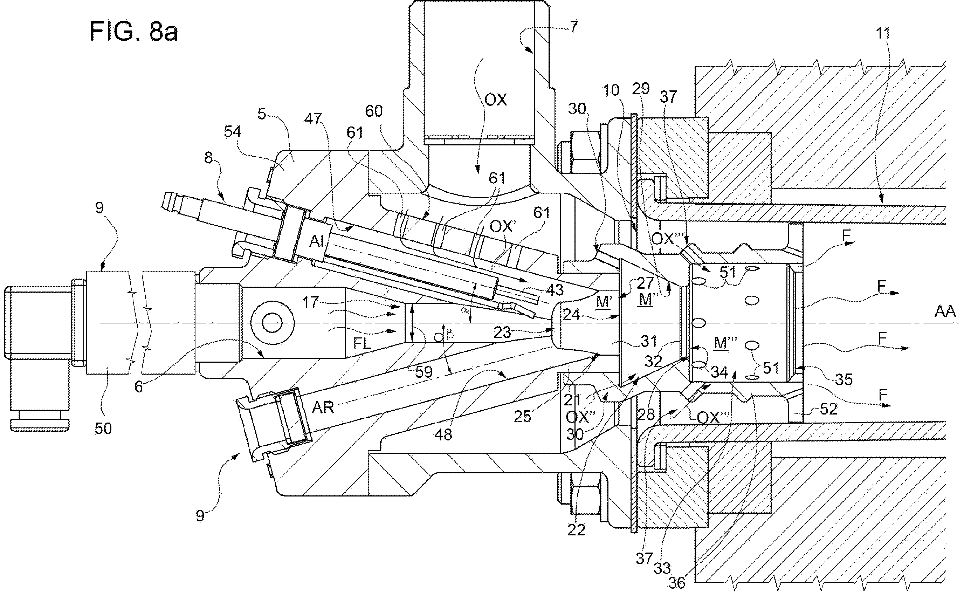

In the non-limiting embodiment of figure 8, in which a section of the multi-stage combustion head 10 is illustrated in detail, the combustion chamber 21 comprises at least one inlet opening 23 and an outlet opening 24 (more precisely arranged on opposite sides of the combustion chamber 21).

In particular, the inlet opening 23 is adapted to (configured to) be communicating with the fuel supply duct 6 and to receive a volumetric, more precisely variable, flow rate of said fuel. The outlet opening 24 faces the tubular discharge element 18 (or the firing chamber 3).

In some non-limiting cases, like the one illustrated in the embodiment of figure 8, the combustion chamber 21 and the combustion chamber 22 are coaxial with each other and arranged along the longitudinal axis AA of the burner 1.

Advantageously but not necessarily, the combustion chamber 21 also comprises a lateral wall 25, in particular cylindrical and/or frusto-conical (or having a complex shape), provided with one or more oxidizer supply channels 26 configured to convey a part OX' of the oxidizer OX into the combustion chamber, generating an oxidizer-fuel mixture M'. In particular, the supply channels 26 of the oxidizer OX are configured to convey (direct) the part OX' of the oxidizer OX to the trigger device 8 (and/or the flame detection device 9). This facilitates ignition of the burner at high capacities. More precisely, the supply channels 26 of the oxidizer OX have different diameters. Advantageously but not necessarily, the supply channels 26 of the oxidizer OX are configured to introduce the part OX' of the oxidizer OX into the combustion chamber 21 with a velocity having at least one component transverse to the axis of symmetry AA of the burner (along which the fuel FL is injected).

Advantageously but not necessarily, along the supply duct 7 of the oxidizer OX towards the combustion chamber 21 a distribution element 60 is arranged for distributing the oxidizer OX provided with a plurality of through openings 61 to split the oxidizer OX flowing into the combustion chamber 21, in particular through the oxidizer supply channels 26. More precisely, the openings 61 have a width of less than 5 mm, in particular less than 4 mm, preferably less than or equal to 3.5 mm. In this way, especially in the case of a particularly high percentage of hydrogen in the fuel FL, it is possible to obtain greater stability of the flame at minimum burner powers. In particular, it is thus possible to distribute in a more gradual uniform way the part OX' of the oxidizer OX, so as to divert less the flow of the fuel FL at the minimum flow rates in the presence of holes with larger dimensions.

In particular, the distribution element 60 comprises at least three, in particular at least four, through openings 61 which, in particular, are circular holes. More in particular, the through holes 61 are equal to one another and are distributed on the distribution element along at least one direction parallel to the longitudinal axis AA of the burner 1. In detail, without limitation, the through openings 61 are arranged exclusively on the side of the duct 7.

Advantageously but not necessarily, the combustion chamber 22 comprises an inlet opening 27 and an outlet opening 28 opposite each other. The inlet opening 27 is configured to be communicating with the outlet opening 24 and to receive the oxidizer-fuel mixture M'. The outlet opening 28 faces the tubular discharge element 18 (or the firing chamber 3).

In some non-limiting cases, like the one illustrated in the embodiment of figure 8, the combustion chamber 22 also comprises a lateral wall 29 having a substantially circular transverse section; in particular, the transverse section of the lateral wall 29 converging radially as it approaches the outlet opening 28.

Advantageously but not necessarily, the combustion chamber 22 is provided with one or more supply channels 30 for the oxidizer OX, configured to convey a part OX" of the oxidizer OX into the combustion chamber 22 generating, together with the oxidizer-fuel mixture M', an oxidizer-fuel mixture M".

In particular, the supply channels 30 for the oxidizer OX are produced in such a way that the part OX" of the oxidizer OX enters the inside of the combustion chamber 22 with a velocity at least partially transverse with respect to a main direction of the oxidizer-fuel mixture M' substantially corresponding to the longitudinal axis AA of the burner.

According to the non-limiting embodiment of figure 8, the lateral wall 29 of the combustion chamber 22 has a substantially frusto-conical shape comprising a larger base 31 and a smaller base 32, in which the larger base 31 is arranged at the inlet opening 27, while the smaller base 32 is arranged at the outlet opening 28.

Advantageously but not necessarily, the supply channels 30 for the oxidizer OX are made so as to allow the part OX' ' of the oxidizer OX to enter the combustion chamber 22 with a velocity having a direction substantially parallel to the lateral wall 29 of the second combustion chamber.

In the non-limiting embodiment of figures 4 to 10, the burner 1 comprising a combustion chamber 33 is arranged downstream of the combustion chamber 22 and provided with an inlet opening 34 and an outlet opening 35 opposite to each other. The inlet opening 34 is configured to be communicating with the outlet opening 28 and to receive the oxidizer-fuel mixture M". In particular, the outlet opening 35 faces the tubular discharge element 18 (or the firing chamber 3). More precisely, the combustion chamber 33 comprises a lateral wall 36 having a substantially circular transverse section, in particular cylindrical (or constant parallel to the longitudinal axis AA of the burner 1), and provided with one or more supply channels 37 for the oxidizer OX configured to allow the inlet of a part OX‴ of the oxidizer OX into the combustion chamber 33, generating, together with the oxidizer-fuel mixture M", an oxidizer-fuel mixture M‴, which is generated inside the combustion chamber 33 and is conveyed towards the tubular discharge element 18 (or towards the firing chamber 3).

Advantageously but not necessarily, and as illustrated in the non-limiting embodiments of figures 1 to 5, the suction element 19 is adapted to (configured to) be arranged, at least partially (in some cases totally) inside the firing chamber 3.

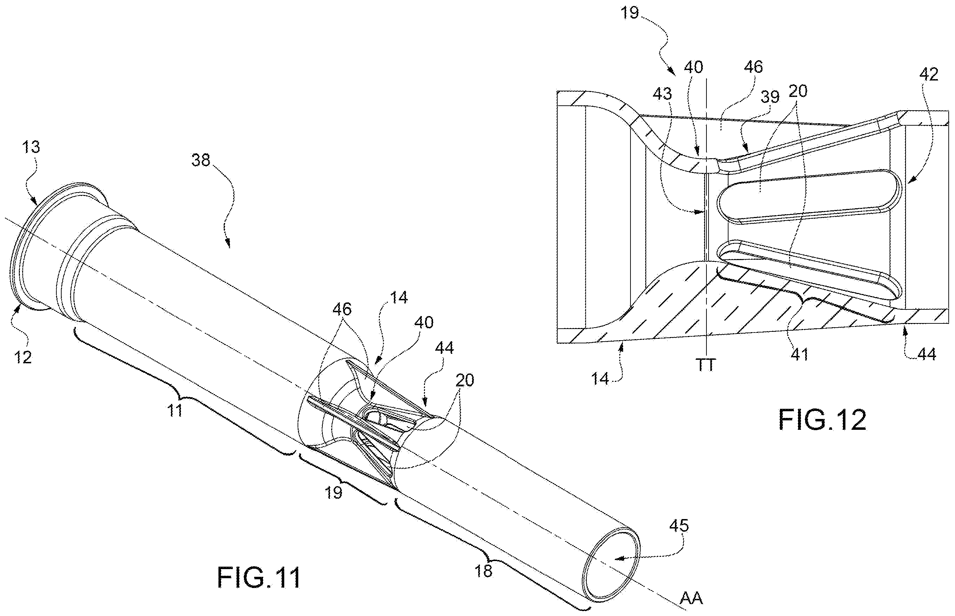

In the non-limiting embodiments of figures 4, 5, 11 and 12, the tubular discharge element 11, the tubular discharge element 18 and the suction element 19 together form a combustion block 38 illustrated schematically overall in figure 11. In particular, a lateral surface 39 of the combustion block 38 is (at least) partially seamless. More in particular, the lateral surface 39 of the combustion block 38 is seamless in the sections not interrupted by the openings 20.

Advantageously but not necessarily, the combustion block 38 is manufactured in one single piece, in particular made of silicon carbide. More precisely, the longitudinal axis of symmetry of the combustion block 38 is the longitudinal axis of symmetry AA of the burner 1, of the tubular discharge elements 11 and 18 and of the multi-stage combustion head 10.

Advantageously but not necessarily, the combustion block 38 is made by means of additive manufacturing, in particular 3D printing.

According to some non-limiting embodiments not illustrated, the combustion block 38 is formed by welding the tubular discharge element 11 with the suction element 19 and the suction element 19 with the tubular discharge element 18.

According to other non-limiting embodiments not illustrated, the combustion block 38 is formed by mechanical coupling by means of fastening systems (e.g., bolts, screws, rivets, etc.) of the tubular discharge element 11 with the suction element 19 and of the suction element 19 with the tubular discharge element 18.

According to further non-limiting embodiments, the combustion block 38 is formed by mould casting techniques.

In the non-limiting embodiments illustrated in the attached figures, the combustion block 38 is hollow and is adapted to (configured to) allow the passage of a mixture (in particular the mixture M‴) generated by the mixing body 5 (or by the combustion head 10). In particular, said mixture M', M", M‴, once the combustion has been triggered, becomes a flame.

According to some non-limiting embodiments, the suction element 19 comprises, in particular is, a Venturi tube.

In the non-limiting embodiment of figures 11 and 12 (where figure 12 illustrates a detail of the suction element 19 of the embodiment of figure 11), the suction element 19 has a choke 40 arranged at the end 14.

Furthermore, the suction element 19 has at least one section 41 having frusto-conical shape, delimited by a larger base 42 and a smaller base 43. Lastly, the tubular discharge element 18 has an open end 44 facing the suction element 19 and an open end 45 facing the centre of the firing chamber 3.

Advantageously but not necessarily, the openings 20 have an elongated shape, or are slots, and cross from side to side (transversely) the frusto-conical section 41 of the suction element 19. In particular, the openings 20 are obtained longitudinally to the tubular discharge element 11 and to the tubular discharge element 18.

More in particular, the smaller base 43 of said frusto-conical section 41 coincides with the choke 40, and the larger base 42 of said frusto-conical section 41 coincides with the open end 44.

Advantageously but not necessarily, the openings 20 are provided on the frusto-conical section 41 of the suction element 19. In particular, they cross from side to side (transversely) the frusto-conical section 41 of the suction element 19.

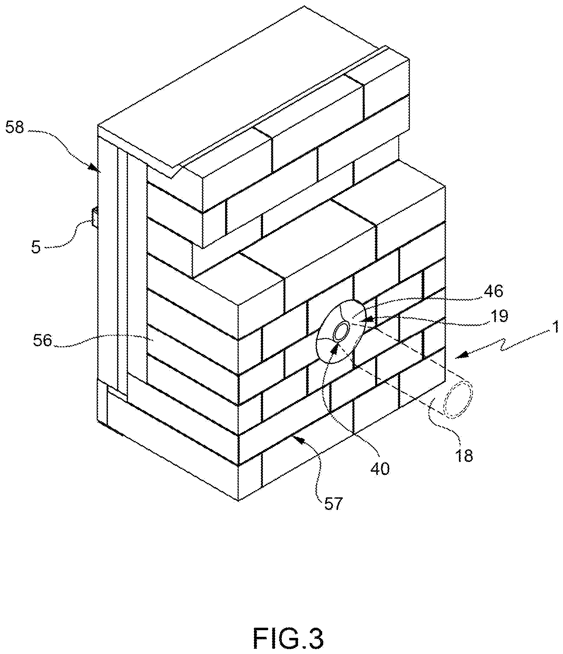

Advantageously but not necessarily, and as illustrated in figures 3-5, 11 and 12, the suction element 19 comprises reinforcement ribs 46. Thanks to these ribs 46, it is possible to elongate the discharge element 18 as desired without risking breakage of the combustion block 38 at the segment with smaller section, or at the suction element 19.

Advantageously but not necessarily, the discharge element 11 has a circular cross-section, in particular with constant diameter.

Advantageously but not necessarily, the discharge element 18 has a circular cross-section, in particular with constant diameter.

Advantageously but not necessarily, the suction element 19 has a circular cross-section.

Advantageously but not necessarily, the suction element 19 has a circular cross-section with substantially variable diameter.

In particular, the cross-section TT (figure 12) of the choke 40 has a diameter smaller than two thirds of the diameter of the discharge element 18 and of the diameter of the discharge element 11. More in particular, the cross-section TT (figure 12) of the choke 40 has a diameter smaller than half of the diameter of the discharge element 18 and of the diameter of the discharge element 11. The more the diameter of the choke 40 is reduced with respect to the diameter of the discharge element 11, the greater the increase in the speed variation of the mixture M‴ which, in use, circulates inside the discharge element 11.

Advantageously but not necessarily, the cross-section TT (figure 12) of the choke 40 has a diameter smaller than a third of the diameter of the discharge element 18 and of the diameter of the discharge element 11. In particular, the cross-section TT (figure 12) of the choke 40 has a diameter greater than one sixth of the diameter of the discharge element 18 and of the diameter of the discharge element 11.

Advantageously but not necessarily, the diameter of the choke 40 is smaller than 30 mm, in particular equal to or smaller than 25 mm. In detail, the diameter of the choke 40 ranges from 5 mm (in particular 10 mm; more in particular 20 mm) to 60 mm (in particular 40 mm; more in particular 30 mm). Also this characteristic counters the backfire and therefore improves management of the combustion with hydrogen-rich mixtures of fuel FL.

Advantageously but not necessarily, the diameter of the discharge element 11 and the diameter of the discharge element 18 range from 20 mm (in particular 40 mm; more in particular 50 mm) to 200 mm (in particular 120 mm; more in particular 100 mm).

In some non-limiting cases, the trigger device 8 and/or the flame detection device 9 have an elongated shape and are inserted inside the mixing body 5 along an electrode channel 47 and an electrode channel 48 respectively arranged along the axes AI and AR respectively (illustrated in figure 8) at least partially inclined (for example by at least 5° or 10°) by an angle α and by an angle β respectively relative to the longitudinal axis AA of the burner 1. In some non-limiting cases, the angles α and β are substantially equal to each other. In other non-limiting cases, the angles α and β are different from each other.

In particular, the angles α and β are angles smaller than 45°. More in particular, the angles α and β are angles smaller than 30°. More precisely, the angles α and β are smaller than 20°. In detail, the angles α and β are substantially equal to 15°.

In the non-limiting embodiment of figure 8, the trigger device 8 comprises a trigger electrode 49 and the flame detection device 9 comprises a detection electrode 50. In particular, the detection electrode 50 is longer than (more precisely over twice as long as) the trigger electrode 49. Advantageously but not necessarily, the flame detection device 9 (more precisely the detection electrode 50) passes through at least the combustion chambers 21 and 22 and is configured to be arranged at least partially tangent to the flame dart (i.e., to the shape of the flame when operating at full capacity). In this way, it is possible to preserve the integrity of the flame detection electrode 50. In effect, the fact that the detection electrode 50 remains tangent to the flame dart, without being immersed inside it, limits wear on the electrode. In particular, as illustrated in the non-limiting embodiment of figure 8, the flame detection device 9 (more precisely the detection electrode 50) also passes through the chamber 33 and terminates inside the tubular discharge element 11. In use, the detection electrode 50 provides data relative to the state of the flame generated by the burner, via which it is possible to appropriately adjust the flow rate of the fuel FL and/or the oxidizer OX.

According to a preferred but non-limiting embodiment, as illustrated in figures 4a, 5a and 8a, the trigger device 8 comprises a trigger electrode 43 and the flame detection device 9 comprises a UV detection probe 50'. In particular, the UV probe 50' is arranged along the longitudinal axis AA of the burner on board a breech 54, more precisely but without limitation, on board the mixing body 5.

Advantageously but not necessarily, the flame detection device 9 (more precisely the UV detection probe 50') is configured so as to receive a UV (ultraviolet radiation) beam coming from the flame which passes through at least the combustion chambers 21 and 22. In use, the UV detection probe 50' provides data relative to the state of the flame generated by the burner, via which it is possible to appropriately adjust the flow rate of the fuel FL and/or of the oxidizer OX. Furthermore, in the case of flameless combustion, at full operating capacity the UV probe 50' is disabled because it is no longer able to detect any flame, since the flame front is diluted inside the kiln firing chamber.

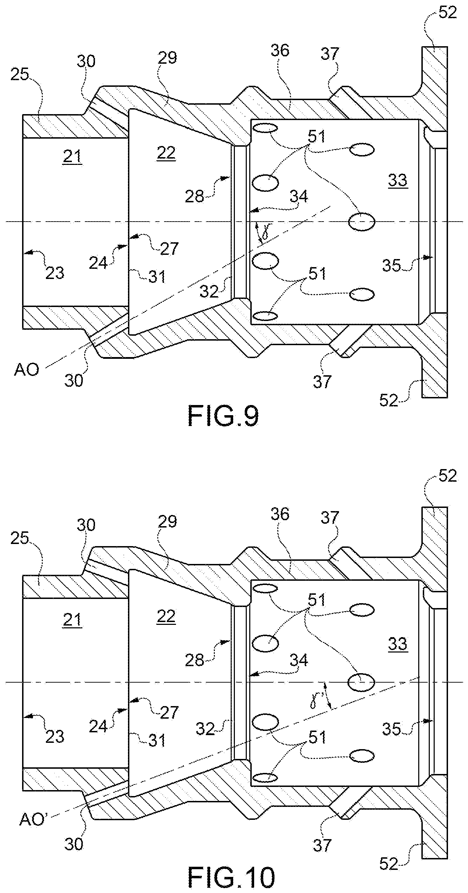

In the non-limiting embodiments of figures 9 and 10 two possible variations of the combustion head 10 are illustrated in front section, in which the oxidizer supply channels 30 have different inclinations from each other. In particular, in figure 9, an inclination axis AO of the channels 30 is inclined by an angle γ substantially equal to 30°, whereas in figure 10 the inclination axis AO' of the channels 30 is inclined by an angle γ' substantially equal to 20°. In this case, the lateral wall 29 of the combustion chamber 22 and the supply channels 30 of the oxidizer OX are substantially parallel. The above can obviously also be applied to the supply channels 37 of the oxidizer OX.

Advantageously but not necessarily, the combustion chamber 33 comprises, on the lateral wall 36, a plurality of holes 51 arranged in one or more radial rows, preferably at the same radial distance from one another.

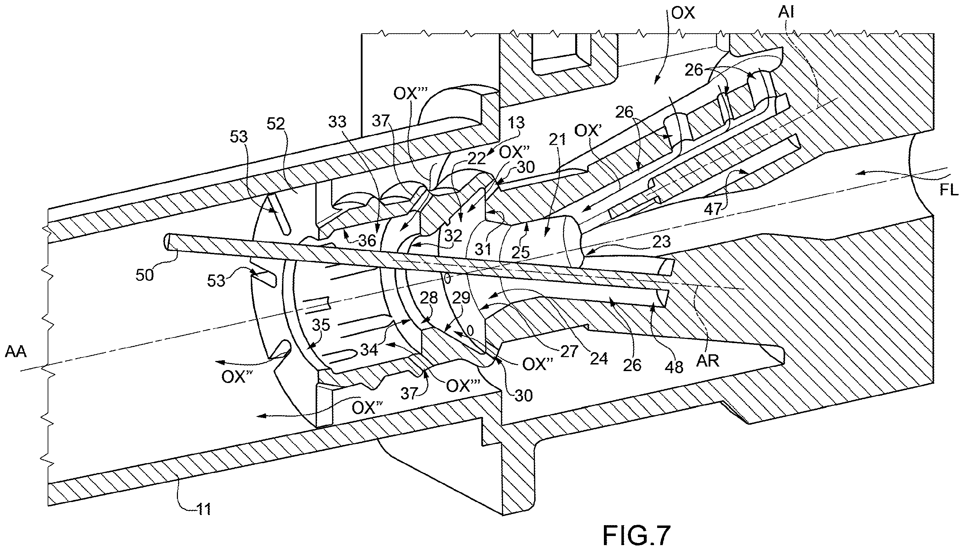

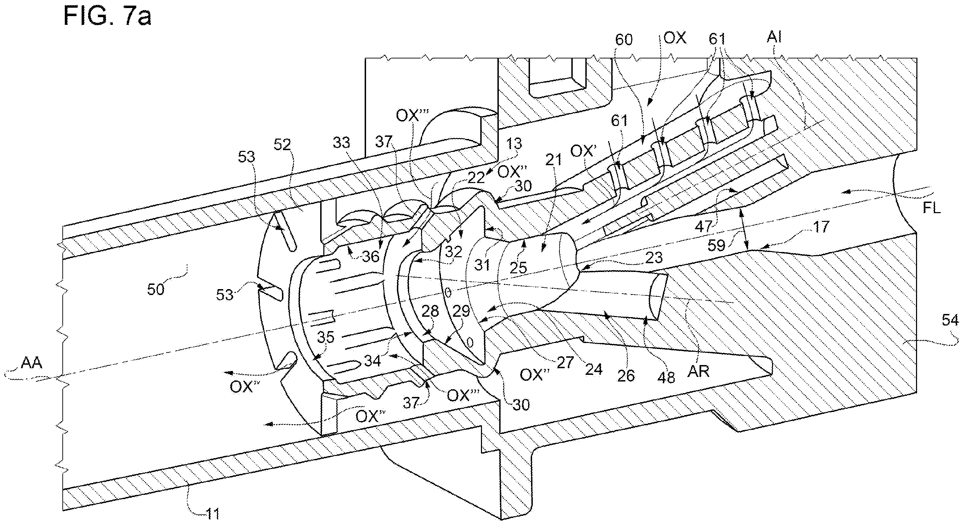

In the non-limiting embodiment of figure 7, the combustion head 33 comprises a crown 52 configured to limit entry of the oxidizer OX into the tubular discharge element 11 which does not pass through the combustion chambers 21, 22 and 33. In particular, the crown 52 extends from the edge of the outlet opening 35 towards (to) the inner wall of the tubular discharge element 11.

Advantageously but not necessarily, and as illustrated in the non-limiting embodiment of figure 7, the crown 52 comprises slots 53 (or any other type of opening) configured to convey a second part OX^{IV} of the oxidizer into the tubular discharge element 11 downstream of the combustion chambers 21, 22 and 33. In this way, together with the oxidizer-fuel mixture M‴, the fluid F is generated flowing out of the tubular discharge element 11, through the suction element 19 towards the tubular discharge 18.

In accordance with a second aspect of the present invention, an industrial apparatus is provided for the firing of ceramic articles.

With particular reference to figures 1 and 2, an industrial apparatus in accordance with the present invention is indicated overall by the number 55.

According to some non-limiting embodiments, the ceramic articles T, once fired, are tiles.

In particular, the ceramic articles T are green at the inlet of the apparatus 55 and fired at the outlet.

The industrial apparatus 55 comprises the kiln 2 (described above), in particular a tunnel kiln, provided with at least one lateral wall 56 which delimits the firing chamber 3 and has a surface 57 inside the firing chamber 3 and a surface 58 outside the firing chamber 3.

The industrial apparatus 55 further comprises the transport system 4, in particular horizontal, which is configured to move the plurality of ceramic articles T along the conveying path P inside the firing chamber 3 (from the inlet to the outlet of the firing chamber 3).

The transport system 4 can be any type of transport system. For example, the transport system 4 comprises a conveyor belt (or a conveyor mesh) on which the green ceramic articles T to be fired are arranged, preferably in an orderly fashion.

According to some non-limiting embodiments not illustrated, the transport system 4 comprises a plurality of ceramic rollers (if necessary, moved at different speeds to differentiate firing of the articles).

In particular, the tunnel kiln 2 has two opposite lateral walls 56, between which the ceramic articles T travel.

According to some non-limiting embodiments not illustrated, the ceramic articles are any type of ceramic article requiring at least one firing in the kiln.

The apparatus 55 comprises a burner 1 which, in turn, comprises a tubular discharge element 11, and preferably but not necessarily a tubular discharge element 18 and a suction element 19 for the gases G, G'.

Advantageously but not necessarily, the apparatus 30 comprises a (hydrogen) burner 1 as previously described.

Advantageously but not necessarily, the apparatus 55 comprises a hydrogen supply system configured to inject hydrogen or a mixture comprising hydrogen into the supply duct 6 for the fuel FL.

Advantageously but not necessarily, the suction element 19 is located between the discharge element 11 and the discharge element 18 and is arranged at least partially (in some non-limiting cases also totally, as illustrated in figure 5) inside the firing chamber 3.

In particular, the suction element 19 is configured to bring at least part of the gases G, G' present inside the firing chamber 3 into the discharge element 18. In this way, it is possible to use the residual oxygen inside the firing chamber 3 and complete the combustion of the gases G, G' that have not been fully combusted during their first passage inside the burner 1, or by primary combustion.

In addition, the gases G, G' (presumably, also in view of the fact that they have a relatively high temperature) help to improve the combustion efficiency.

The term "primary combustion" indicates the combustion generated by the mixing body 5 (in particular by the combustion head 10), the flame of which passes through the discharge element 11.

Advantageously but not necessarily, and as illustrated in the non-limiting embodiment of figure 4, the suction element 19 is arranged at the inner surface 57 of one of the lateral walls 56.

In particular, the suction element 19 is configured to create a negative partial pressure between the discharge element 11 and the discharge element 18 so as to bring at least part of the gases G, G' present in the firing chamber 3 into the discharge element 18. In other words, in the non-limiting embodiments illustrated in the attached figures, the negative partial pressure is generated by Venturi effect.

The high flame speed generated by the multi-stage combustion head 10 has the surprising synergic effect of increasing the suction capacity of the suction element 19.

According to some non-limiting embodiments not illustrated, the burner comprises several tubular discharge elements 18 inside the firing chamber 3, with several suction elements 19 positioned between them at intervals.

According to the non-limiting embodiment of figure 2, the apparatus 55 comprises a plurality of burners 1 arranged in series along a direction DD parallel to the conveying path P. In particular, the burners 1 are arranged on several levels inside at least one of the walls 56 of the kiln 2.

In the non-limiting embodiments of figures 1 to 5, the burner 1 is coupled, by means of fastening elements, to the wall 56 of the kiln 2. In particular, the discharge element 11 is inserted inside the wall 56.

In the non-limiting embodiment of figure 1, the burners 1 are oriented in a direction DP transverse (in particular, perpendicular) to the direction DD (and therefore to the conveying path P).

Advantageously but not necessarily, the tubular element 11 of the burner 1 is installed so as to pass through, at least partially (in particular totally and transversely), one of the lateral walls 56 of the kiln 2. In this way the flame produced by the burner 1 will flow directly towards the inside of the firing chamber 3 of the kiln 2.

According to the non-limiting embodiments illustrated in the attached figures, the burner 1 has a longitudinal axis AA which is transverse to the conveying path P. In particular, the axis AA is perpendicular to the conveying path P. More in particular, the axis AA is perpendicular also to the lateral wall 56 of the industrial tunnel kiln 2.

Advantageously but not necessarily, the tubular discharge element 18 of the burner 1 is coaxial with respect to the tubular discharge element 11 and is substantially completely arranged inside the firing chamber 3.

According to some non-limiting embodiments not illustrated, the discharge element 11 of the burner 1 is installed so as to partially protrude inside the firing chamber 3.

Advantageously but not necessarily, the openings 20 are arranged at least partially (in particular totally) inside the firing chamber 3.

Advantageously but not necessarily, the apparatus 55 (or each burner 1) comprises at least one electronic control unit 62 configured to control the burner 1 so as to pass from a firing configuration with flame to a flameless firing configuration. In particular, the electronic control unit 62 is configured to extinguish the flame by reducing (preferably interrupting) the supply of the fuel FL and if necessary, of the oxidizer OX, selectively inhibit the flame control (by means of the detection device 9) and restore the supply of the fuel FL and if necessary, of the oxidizer OX allowing the burner 1 to fire in flameless mode. By using flameless combustion, or a combustion which exploits the fact that inside the kiln there is a temperature higher than the self-ignition temperature of the fuel, it is possible to drastically reduce the emissions of NOx normally generated in the combustion of hydrogen-rich mixtures (and in general combustions with high flame peaks), thus allowing the use of an environmentally sustainable fuel with low emissions.

Advantageously but not necessarily, and as illustrated in the non-limiting embodiment of figure 1, the apparatus comprises at least two temperature control devices 63, in particular at least two thermocouples 64 with double filament, arranged in at least two different "significant" points of the kiln 2. These two points are such as to ensure that at each point of the firing chamber the temperature is sufficiently higher than the self-ignition temperature of the combustible mixture.

Advantageously but not necessarily, if the temperature detected by the two thermocouples 64 drops below the self-ignition temperature, the flame is sparked and re-ignited, namely the electronic control unit 62 immediately restores the operating mode of the burner 1 with flame.

According to a further aspect of the present invention, a method is provided for the firing of ceramic articles conveyed inside a tunnel kiln.

The method comprises at least a step of supplying a burner as previously described with a fuel comprising at least a percentage of hydrogen higher than 20%, in particular higher than 50%, more in particular higher than 70%. These fuel mixtures are made possible by the particular geometry of the burner described above, in particular thanks to the multi-stage combustion head 10. Furthermore, the dimensions of the nozzle 17 (of the axial hole 59), the geometry of the distribution element, namely the dimension and number of through openings 61, and the tubular discharge element 18 and the suction element 19, synergically result in the important technical effect of reducing environmental impact, allowing the use of a hydrogen-rich mixture as fuel and lowering of the NOx.

In some non-limiting cases, the fuel FL comprises a hydrogen percentage higher than 90%. In particular, the fuel is 100% hydrogen.

The method further comprises the step of simultaneously supplying the burner 1 with the oxidizer OX and triggering (igniting) the flame (by means of the trigger device 8) which extends at least partially inside the burner and the firing chamber 3 of the kiln 2.

Once the flame has been ignited, the method entails controlling the flame in feedback by means of the detection device 9. Advantageously but not necessarily, the method comprises the further steps, once the firing chamber 3 of the kiln 2 has reached a predefined temperature (in particular higher than the self-ignition temperature of the fuel FL), of extinguishing the flame by reducing (or interrupting) supply of the fuel FL and if necessary of the oxidizer OX; preferably disabling the above-mentioned flame feedback control; and restoring the supply of the fuel FL, in particular also of the oxidizer, generating inside the tunnel kiln 2 a flameless combustion which fires the ceramic articles T. In these non-limiting cases, this step represents firing of the kiln 2 at full capacity. In this latter step, in particular, the burner 1 is no longer mechanically ignited/triggered and there is no longer a flame (or rather, a flame front) present and located on the combustion head 10 and inside the tubular discharge element 11, because it is diluted directly in the kiln chamber with the combustion products already present in the chamber 3 with an oxygen level lower than that of the comburent air. In other words, in this way, the oxidizer/fuel mixture flowing out of the burner 1 towards the firing chamber 3 is ignited inside the chamber 3.

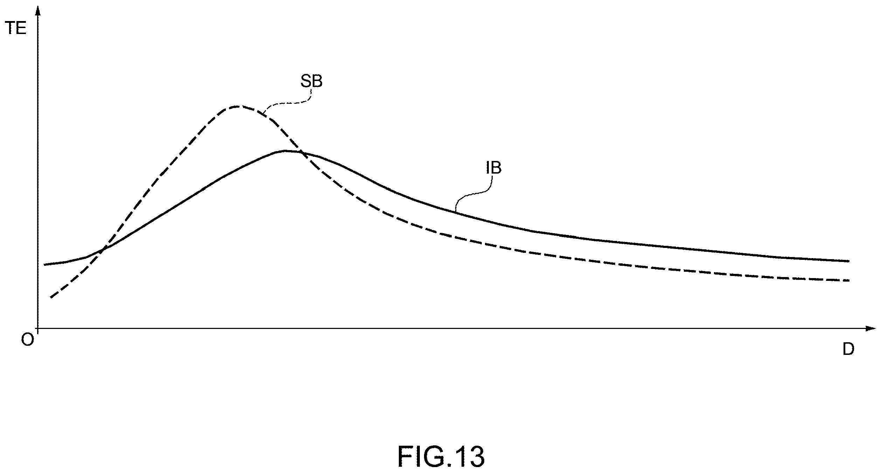

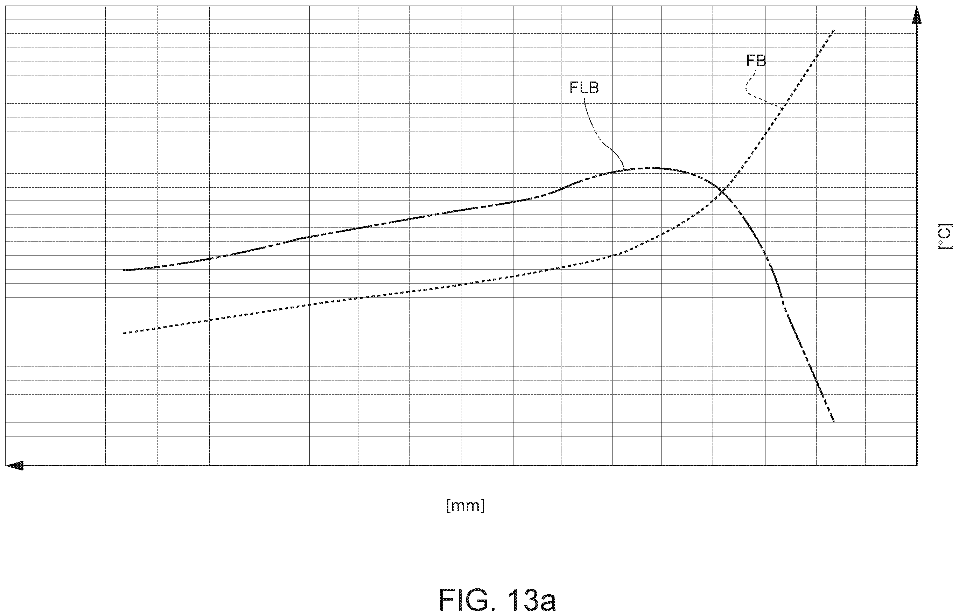

In this way, it is possible (as illustrated in the non-limiting embodiment of figure 13a, which illustrates temperature profiles FB with flame and FLB without flame as the distance from the lateral wall 56 of the kiln 2 increases) to avoid the presence of temperature peaks (which are one of the main causes of the production of NOx) with respect to the traditional solutions with flame. In particular, in figure 13a it can be seen from the profile FB that the temperatures obtained from combustion with flame in the immediate vicinity of the discharge are extremely high (around 1500°C near the discharge and even 1600°C-1800°C inside the combustion block 38). On the other hand, in the flameless configuration, peak temperatures of approximately 1250° have been recorded inside the firing chamber 3 of the kiln 4, whereas inside the burner 1 there are only a few hundred degrees since no combustion is present. This entails in turn a lower thermal load on the components of the burner 1 (for example on the combustion head 10, on the mixing body 5, on the combustion block 38, on the oxidizer and fuel pipes, etc.). At the same time, a significant reduction in heat loss caused by the burner is obtained, thus improving the efficiency of the kiln 2.

In the absence of a flame, furthermore, the burner 1 will be more silent, thus also reducing the noise pollution produced by the latter.

In addition, due to the lower compression inside the combustion block 38, the power that can be delivered by the single burner increases.

Lastly, the higher speed reached to counter the backfire increased by the hydrogen allows greater penetration of the fumes flowing out of the burner 1 inside the firing chamber 3, which results in greater uniformity in firing of the articles T.

In use, the trigger device 8 (in particular the trigger electrode) generates a spark which together with the fuel FL flowing in from the duct 6 and the oxidizer OX flowing in from the duct 7 causes generation of the flame. In particular, the part OX' of the oxidizer and fuel FL generate the mixture M' inside the combustion chamber 21, which defines a first stage of the flame and continues towards the combustion chamber 22, inside which the mixture M' and the part OX" of the oxidizer form the mixture M", which defines a second stage of the flame. The mixture M" in combustion is conveyed towards the combustion chamber 33, inside which the mixture M" and the part OX‴ of the oxidizer are combined (in particular together with a further part of oxidizer flowing in from the holes 51) to form the mixture M‴, which in turn flows out of the combustion chamber 33 into the tubular discharge element 11 in which, mixing with the part OX^{IV} of the oxidizer OX, it forms the fluid F. Therefore, the mixing body 5 generates an at least partially combusted mixture, or a flame, the fluids F of which travel through the discharge element 11, which introduces them into the suction element 19, which in turn conveys them (together with the gases G, G' extracted from the inside of the firing chamber 3) into the discharge element 18. The latter introduces the flame into the combustion chamber.

The combustion products emitted by the burner 1 are not totally combusted during their first passage through the discharge element 11, but the combustion is increased (completed) due to continuous recirculation of the gases G, G' (present inside the firing chamber 3) through the suction element 19 into the discharge element 18.

In other words, the burner 1 generates, via the trigger device 8, a primary combustion on the gases flowing in from the ducts 6 and 7 (fuel and oxidizer) and a secondary combustion thereof by exploiting the gases G, G' recirculated from the inside of the firing chamber 3 and not completely combusted (in which residual oxygen is present) extracted by the suction element 19. In particular, the primary combustion takes place inside the discharge element 11 and the secondary combustion takes place inside the discharge element 18.

In particular, the combined action of the choke 40 and the multi-stage combustion head 10 (which allows a good combustion percentage to be obtained in less time due to pre-mixing inside the combustion chambers 21, 22 and 33) determine an increase in the speed of the fluid F emitted from the burner 1 flowing out of the discharge element 11. Subsequently, the speed of the gas drops again due to the tapered, in particular diverging, shape of the frusto-conical section 41. In detail, the use of a multi-stage combustion head 10 allows the choke 40 to be further narrowed determining an even greater negative partial pressure.

It has been hypothesized that the speed variation of the fluid F, exploiting the Venturi effect, causes a negative partial pressure at the openings 20. This negative partial pressure causes, in turn, suction of the gases G, G' present inside the chamber 3 and therefore allows a secondary combustion exploiting said gases G, G' (in which a fair percentage of oxygen is still present - approximately 10%).

In the non-limiting embodiments illustrated in the attached figures, the suction element 19 (due to the high speed of the fluid F generated by the multi-stage combustion head 10) causes an increase in the turbulent motion inside the firing chamber 3. Furthermore, the secondary combustion that takes place inside the discharge element 18 generates a further increase in heat exchange, in particular by radiation, due to heating of the discharge element 18. This results in an increase in the overall heat exchange coefficient on the ceramic articles T and a greater temperature uniformity inside the firing chamber 3.

According to the advantageous non-limiting embodiment illustrated in figures 3 and 4, the choke 40 of the suction element 19 is arranged at the level of the inner surface 57 of the wall 56 of the kiln 2. This characteristic allows maximization of the suction and recirculation of the gases G' present near the inner surface 57 of the wall 56 of the kiln 2, which are the gases with lowest turbulence and therefore lowest temperature.

The graph in figure 13 illustrates the temperature trend according to the distance from the wall 56 of the kiln 2; this graph has been obtained experimentally. In particular, the Y axis indicates the temperature of the ceramic articles T in firing and the X axis the distance from the wall 56. The temperature variation indicated by the broken line SB refers to an apparatus with a standard burner, while the temperature variation indicated by the continuous line IB refers to a non-limiting embodiment of the apparatus 55 in accordance with the present invention.

It is therefore evident that, by using an apparatus 55 or a set of burners 1 in accordance with the present invention, a greater temperature uniformity is obtained along the width of the firing chamber 3 of the kiln 2. In particular, the temperature in the vicinity of the wall 56 is considerably increased due to the turbulence generated by the suction element 19 (thanks to the higher speed allowed by the multi-stage combustion head 10) and the contribution of the radiation provided by the discharge element 18 in the vicinity of said wall 56. Furthermore, the temperature in the centre of the kiln is increased with respect to the traditional case due to use of the discharge element 18, which allows the combustion block 38 to reach great depths inside the kiln 2. Therefore, the flame coming out of said discharge element 14 is emitted at a greater depth than in the traditional solutions.

It is important to note that also the temperature peak in the vicinity of the discharge of the burner 1 is (at least partially) flattened.

Although the invention described above refers in particular to a precise implementation example, it should not be considered limited to said implementation example, since all variations, modifications or simplifications covered by the attached claims fall within its scope, such as, for example, a different geometry of the combustion head 10, of the combustion block 38 and in particular of the suction element 19, a different suction method of the gases G' in the vicinity of the inner surface 57 of the lateral wall 56, a different arrangement of the burners 1 inside the apparatus 55 (in terms of both position and alignment), a different transport system 4, etc.

The apparatus and the burner described above offer numerous advantages.

Firstly, production and assembly of the burner 1 are simplified compared to solutions of the known art comprising several components. In addition, the burner 1, given the geometry and penetration into the firing chamber 3, can very simply be installed to replace (as an improvement of) a standard architecture.

Furthermore, the presence of the discharge element 18 inside the chamber 3 and of the suction element 19 in the vicinity of the inner surface 57 of the wall 56 and not inside the wall 56 avoid problems connected with overheating of said wall 56, usually made of brickwork, which would entail overheating, with possible breakages, of the combustion block 38 and/or overheating of the mixing body 5 (usually made of metal), which in turn would generate a risk of burns for the operators and a non-negligible dispersion of energy. Furthermore, problems are avoided connected with the formation of deposits and obstructions that may be caused by condensation of recirculated gases inside the brickwork of the lateral wall 31.

Further advantages of the present invention are reduction of dispersions, increase in combustion (the recirculation obtained, at least 50% of the burner combustion products, allows the use of regulations with reduction of the oxidizer, exploiting the residual oxygen present in the recirculated gases G, G') and temperature uniformity inside the firing chamber 3, and these determine, on the part of the apparatus 55 and the burner 1 in accordance with the present invention, the need for a lower quantity of gas (usually methane) to be introduced into the burner 1 to maintain a given temperature, with respect to the solutions of the known art.

Furthermore, the use of a multi-stage combustion head 10 allows reduction of the flame temperature peaks, which are the main cause of the creation of nitrogen oxides. Therefore, the present invention determines a reduction in nitrogen oxides (NOx), in particular below 50 ppm.

In addition, the synergic effect between the multi-stage combustion head 10 and the combustion block 38 allows for the use of very small discharges. In particular, in some non-limiting cases, the diameter of the choke is 25 mm. This is due to the high speed that can be obtained by means of the air staging technique, which allows a flame speed of approximately 200 m/s.

The present invention is configured to be supplied with different types of gas (for example methane or LPG) and is designed to function with environmentally sustainable fuels such as, for example, hydrogen-enriched methane, pure hydrogen, etc. In particular, the shape of the oxidizer supply channels varies depending on the fuel used.

Compared to a traditional burner, the flame of the burner in accordance with the present invention is more uniform and less swirled.

This characteristic allows the flame to remain neat and to propagate more without opening too much in the surrounding environment (or in the firing chamber 3). This means that the ceramic articles in transit during the firing are affected very little by direct interaction of the flame, therefore avoiding possible technological defects (colour shading, different sizes, etc.) due to the temperature peaks often determined by direct interaction with the flame.

Furthermore, the high recirculation created by the very high flame speed of the burner 1, comprising a combustion block as described above, dilutes the flame temperatures (or diminishes the peaks, increasing the median) and increases the coefficient of convective exchange with the ceramic articles T. For this reason, with respect to a traditional architecture and with the same power, the present invention allows greater heating of the material without "attacking" it with flame temperature peaks, oxidizing in a more uniform manner the organic substances contained in the ceramic articles T and therefore avoiding the appearance of a darker colouring on the internal portion of an article when seen in section.

In this way, the risk of explosion of the ceramic articles T in a pre-heating area of the kiln 2, for example when articles with an excessive humidity content are placed in the kiln, is also partially inhibited.

In addition, due to the high recirculation of gas generated, the combustion products tend to stratify horizontally, without creating vertical motions from a lower chamber of the kiln towards an upper chamber in the vicinity of the walls. For this reason, the occurrence of imperfections (small cracks) on lateral edges of the articles adjacent to the lateral walls 56 of the kiln 2, especially in the pre-heating areas, is at least partially inhibited.

Since the burner 1 maintains a high flame speed also at low working capacity (for example in the case of production gaps), also the crown of the kiln 2 is not (substantially) thermally stressed by the direct interaction of the flame. Consequently, the apparatus 55 in accordance with the present invention also allows greater firing uniformity of the ceramic articles, especially in "wide mouth" kilns. This characteristic determines the further advantage of being able to reduce the height of the chamber 3 of the kiln 2, so as to further increase the exchange between the gases G and the ceramic articles T in firing without risking damage to the crown of the kiln or the articles themselves due to undesired flame plumes.

Lastly, the reduction of the kiln chamber results in the following advantages: reduction of the volumes inside the chamber, therefore improved convective thermal exchange with the material and consequent reduction of specific consumption.

## Claims

1. The burner (1) for the firing of ceramic articles (T), which can be installed in an industrial kiln (2) comprising a firing chamber (3); the burner (1) comprising: a mixing body (5); comprising in turn at least one duct (6) to supply a fuel (FL) comprising a percentage of hydrogen; at least one duct (7) to supply an oxidizer (OX); a trigger device (8) to start a combustion; a flame detection device (9); a first tubular discharge element (11), which is configured to be passed through by a fluid (F) flowing out of the mixing body (5) and is provided with a first end (12), inside which at least part of the mixing body (5) is inserted, and a second end (14), which is opposite the first end (12);
the burner (1) being **characterized in that** the mixing body (5) comprises a multi-stage combustion head (10), which is arranged at least partially inside the first tubular discharge element (11); wherein the multi-stage combustion head (10) comprises at least one first combustion chamber (21), which is configured to generate a first phase of combustion of a flame, and at least one second combustion chamber (22), communicating with the first combustion chamber (21) and is configured to generate a second phase of combustion of the flame coming out of the first combustion chamber (21); the first and the second combustion chambers (21, 22) being configured to convey the flame inside the first tubular discharge element (11) towards the second end (14) .

2. Burner (1) according to claim 1, comprising at least one second tubular discharge element (18), which extends from the second end (14) on the opposite side with respect to the first end (12); and a suction element (19), which is configured to bring at least part of the gases (G, G') present outside the burner (1) into the second tubular discharge element (18) and is provided with one or more openings (20) arranged between the first (11) and the second (18) tubular discharge elements; in particular, , wherein the first tubular discharge element (11) is coaxial with the second tubular discharge element (18) and with the multistage combustion head (10); in particular, the first tubular discharge element (11), the second tubular discharge element (18) and the suction element (19) form a combustion block (38), which has a lateral surface (39) at least partially seamless;
in particular, wherein the first tubular discharge element (11), the second tubular discharge element (18) and the suction element (19) form a combustion block (38) manufactured as one single piece, in particular made of silicon carbide; the combustion block (38) being coupled to the mixing body (5);
in particular, wherein the first tubular discharge element (11) has a choke arranged at the second end; the choke allowing the second end to have a diameter which is smaller than 30 mm, in particular equal to or smaller than 25 mm;
in particular, wherein the suction element (19) has a choke (40) arranged at the second end (14); the suction element (19) has at least one frusto-conical shaped section (41), which is delimited by a larger base (42) and a smaller base (43); the second tubular discharge element (18) has a first open end (44), facing the suction element (19), and a second open end (44) facing the inside of the firing chamber (3);
more in particular, wherein the openings (20) extend through the suction element (19), for example, they have an elongated shape and are arranged longitudinally to the first tubular discharge element (11) and to the second tubular discharge element (18)); the smaller base (43) of the frusto-conical shaped section (41) coincides with the choke (40); the larger base (42) of the frusto-conical shaped section (41) coincides with the first open end (44); in particular, the openings (20) are arranged on the frusto-conical shaped section (41);
in particular, the first and second combustion chambers (21, 22) being configured to convey the flame at high speed inside the first tubular discharge element (11) and, passing through the suction element (19), towards the second tubular discharge element (18).

3. The burner (1) according to claim 2, wherein the suction element (19) is configured to be arranged, at least partially, inside the firing chamber (3).

4. The burner (1) according to claim 1 or 2, wherein the first combustion chamber (21) comprises a first inlet opening (23) and a first outlet opening (24); the first inlet opening (23) being configured to be communicating with the duct (6) to supply the fuel and to receive a volumetric flow rate, in particular variable, of said fuel (FL); the first outlet opening (24) facing the second tubular discharge element (18); the first combustion chamber (21) also comprising a first lateral wall (25), in particular cylindrical, provided with one or more first oxidizer (OX) supply channels (26), which are configured to convey a first part (OX') of the oxidizer (OX) inside the first combustion chamber (21) generating a first oxidizer(OX)-fuel mixture (M'); in particular, the first combustion chamber (21) and the second combustion chamber (22) are coaxial with each other and arranged along a longitudinal axis (AA) of the burner (1); in particular, the first oxidizer (OX) supply channels (26) are configured to convey the first part (OX') of the oxidizer (OX) in correspondence to the trigger device (8) .

5. The burner (1) according to any one of the preceding claims, wherein the second combustion chamber (22) comprises a second inlet opening (27) and a second outlet opening (28); the second inlet opening (27) being configured to communicate with the first outlet opening (24) and to receive the first oxidizer-fuel mixture (M'); the second outlet opening (28) facing the second tubular discharge element (18); the second combustion chamber (22) also comprising a second lateral wall (29) having a substantially circular cross-section, in particular converging radially towards the second outlet opening (28); the second combustion chamber (22) being provided with one or more second oxidizer (OX) supply channels (30), which are configured to convey a second part (OX") of the oxidizer (OX) inside the second combustion chamber (22) generating, together with the first oxidizer-fuel mixture (M'), a second oxidizer-fuel mixture (M"); in particular, the second oxidizer (OX) supply channels (30) are made in such a way as to allow the second part (OX") of the oxidizer (OX) to enter the second combustion chamber (22) with a velocity having at least one tangential component with respect to a main direction of the first oxidizer-fuel mixture (M'), or with respect to a longitudinal axis (AA) of the burner (1) ;
in particular, wherein the second lateral wall (29) of the second combustion chamber (22) has a frusto-conical shape comprising a larger base (31) and a smaller base (32); wherein the larger base (31) at the second inlet opening (27), while the smaller base (32) is arranged at the second outlet opening (28); in particular, the second oxidizer (OX) supply channels (30) are made in such a way as to allow the second part (OX") of the oxidizer (OX) to enter the second combustion chamber (22) with a velocity substantially parallel to the second lateral wall (29) of the second combustion chamber (22).

6. The burner (1) according to any one of the preceding claims and comprising a third combustion chamber (33) located downstream of the second combustion chamber (22) and provided with a third inlet opening (34) and a third outlet opening (35); the third inlet opening (34) being configured to be communicating with the second outlet opening (28) and to receive the second oxidizer-fuel mixture (M"); the third outlet opening (35) facing the second tubular discharge element (18); the third combustion chamber (33) comprising a third lateral wall (36) having a substantially circular cross-section, in particular cylindrical, and provided with one or more third oxidizer (OX) supply channels (37), which are configured to allow a third part (OX‴) of the oxidizer (OX) to enter the third combustion chamber (33) generating, together with the second oxidizer-fuel mixture (M"), a third oxidizer-fuel mixture (M‴), which is conveyed towards the second tubular discharge element (18).

7. The burner (1) according to any one of the preceding claims, wherein the trigger device (8) and/or the flame detection device (9) have an elongated shape and are inserted inside the mixing body (5) respectively along a first channel (47) and a second channel (48) arranged along the axes (AI, AR) at least partially inclined with respect to a longitudinal axis (AA) of the burner (1); in particular the flame detection device (9) passes through at least one first combustion chamber (21) and one second combustion chamber (22) and is configured to be arranged at least partially tangent to a flame dart, namely to the shape of the flame when operating at full capacity.

8. The burner (1) according to claim 1, wherein the fuel supply duct (6) comprises a nozzle for introduction of the fuel towards the first combustion chamber (21), said nozzle having an axial hole with a diameter smaller than 20 mm, in particular smaller than 15 mm, more in particular smaller than or equal to 13.5 mm;
in particular, wherein the fuel introduction nozzle is obtained on a breech of the burner as one single piece together with the latter.

9. The burner (1) according to claim 1,
wherein, an oxidizer distribution element is arranged along the oxidizer supply duct, towards the first combustion chamber, the element is provided with a plurality of through openings to split the oxidizer flowing into the first combustion chamber; wherein said openings have a width which is smaller than 5 mm, in particular smaller than 4 mm, preferably smaller than or equal to 3.5 mm;
in particular, wherein the distribution element comprises at least three, in particular at least four through openings; in particular, said openings are circular holes;
in particular, wherein the flame detection device comprises a UV probe, more in particular arranged along a longitudinal axis of the burner on board a breech of the mixing body.

10. An industrial apparatus (55) for the firing of ceramic articles (T) comprising: a tunnel kiln (2) provided with at least one lateral wall (56), which at least partially delimits a firing chamber (3) and has an inner surface (57) on the inside of the firing chamber (3) and an outer surface (58) on the outside the firing chamber (3); a transport system (4), which is configured to move a plurality of ceramic articles (T) along a conveying path (P) inside the firing chamber (3);
wherein the kiln (2) comprises at least one burner (1) according to any one of claims 1 to 9; the industrial apparatus (55) comprising at least one hydrogen supply system, which is configured to inject hydrogen or a mixture comprising hydrogen into the fuel supply duct.

11. Apparatus (55) according to claim 10, comprising a burner (1) according to claim 2, wherein the suction element (19) is arranged between the first tubular discharge element (11) and the second tubular discharge element (18) and is, at least partially, arranged inside the firing chamber (3); the suction element (19) is configured to bring at least part of the gases (G, G') present in the firing chamber (3) into the second tubular discharge element (18); in particular, the suction element (19) is arranged at the inner surface (57) of the lateral wall (56); the suction element (19) is configured to create a negative partial pressure between the first discharge element (11) and the second discharge element (18) so as to bring at least part of the gases (G, G') present in the firing chamber (3) into the second discharge element (18); in particular, the apparatus (55) comprises a plurality of burners (1) arranged in series along a direction (DD) which is parallel to the conveying path (P); in particular, said burner (1) has a longitudinal axis (AA) which is transverse (in particular, perpendicular) to the conveying path (P), for example perpendicular to said wall (56) of the industrial kiln (2);
in particular, wherein the first tubular discharge element (11) of the at least one burner (1) at least partially (in particular, totally) extends through (in particular, transversely to) the lateral wall (56) of the kiln (2); the second tubular discharge element (18) of the burner (1) being substantially coaxial with respect to the first tubular discharge element (11) and being substantially completely arranged inside the firing chamber (3).

12. The apparatus (55) according to any one of claim 11,
wherein the first tubular discharge element (11) of the at least one burner (1) is installed so as to partially protrude into the firing chamber (3).

13. The apparatus (55) according to claim 10 or 11 and comprising at least one electronic control unit, which is configured to control the burner (1) so as to pass from a firing configuration with flame to a flameless firing configuration; in particular, the electronic control unit being configured to extinguish the flame by reducing the supply of fuel and, if necessary, of the oxidizer and to restore the supply of fuel and, if necessary, of the oxidizer allowing the burner to fire in flameless mode; in particular, the apparatus comprises at least two temperature control devices, in particular thermocouples with double filament, arranged in at least two different points of the tunnel kiln.

14. A method for the firing of ceramic articles (T) conveyed inside a tunnel kiln and comprising the steps of:
- supplying a burner according to any one of the claims from 1 to 9, with a fuel comprising at least a percentage of hydrogen higher than 20%, in particular higher than 50%, more in particular higher than 70%;
- simultaneously supplying said burner with an oxidizer and sparking a flame at least partially inside the burner and a firing chamber of the tunnel kiln;
- controlling said flame in feedback.

15. The method according to claim 14 and comprising, once the firing chamber of the kiln has reached a certain temperature, the further steps of:
- extinguishing the flame by reducing the supply of fuel and, in particular, of the oxidizer; and
- restoring the supply of fuel and, in particular, of the oxidizer generating, inside the tunnel kiln, a flameless combustion which fires the ceramic articles.

## Patentansprüche

1. Brenner (1) zum Brennen von Keramikartikeln (T), der in einem Industrieofen (2) mit einer Brennkammer (3) eingebaut sein kann;
wobei der Brenner (1) aufweist: einen Mischkörper (5); der seinerseits mindestens eine Leitung (6) aufweist, um einen Brennstoff (FL) mit einem prozentualen Anteil von Wasserstoff zuzuführen; mindestens eine Leitung (7), um einen Oxidator (OX) zuzuführen; eine Auslösevorrichtung (8), um eine Verbrennung zu starten; eine Flammendetektionsvorrichtung (9); ein erstes rohrförmiges Abgabeelement (11), das so konfiguriert ist, dass es von einem aus dem Mischkörper (5) strömenden Fluid (F) durchlaufen wird und mit einem ersten Ende (12), in dem mindestens ein Teil des Mischkörpers (5) eingeführt ist, und einem zweiten Ende (14) versehen ist, das entgegengesetzt zum ersten Ende (12) ist;
wobei der Brenner (1) **dadurch gekennzeichnet ist, dass** der Mischkörper (5) einen mehrstufigen Verbrennungskopf (10) aufweist, der mindestens teilweise im ersten rohrförmigen Abgabeelement (11) angeordnet ist; wobei der mehrstufige Verbrennungskopf (10) aufweist: mindestens eine erste Verbrennungskammer (21), die so konfiguriert ist, dass sie eine erste Phase einer Verbrennung einer Flamme erzeugt, und mindestens eine zweite Verbrennungskammer (22), die mit der ersten Verbrennungskammer (21) kommuniziert und so konfiguriert ist, dass sie eine zweite Phase einer Verbrennung der aus der ersten Verbrennungskammer (21) austretenden Flamme erzeugt; wobei die erste und die zweite Verbrennungskammer (21, 22) so konfiguriert sind, dass sie die Flamme im ersten rohrförmigen Abgabeelement (11) zum zweiten Ende (14) übertragen.

2. Brenner (1) nach Anspruch 1, der aufweist: mindestens ein zweites rohrförmiges Abgabeelement (18), das sich vom zweiten Ende (14) auf der entgegengesetzten Seite im Hinblick auf das erste Ende (12) erstreckt; und ein Ansaugelement (19), das so konfiguriert ist, dass es mindestens einen Teil der außerhalb des Brenners (1) vorhandenen Gase (G, G') in das zweite rohrförmige Abgabeelement (18) führt, und mit einer oder mehreren Öffnungen (20) versehen ist, die zwischen dem ersten (11) und dem zweiten (18) rohrförmigen Abgabeelement angeordnet sind; wobei insbesondere das erste rohrförmige Abgabeelement (11) koaxial mit dem zweiten rohrförmigen Abgabeelement (18) und mit dem mehrstufigen Verbrennungskopf (10) ist; insbesondere das erste rohrförmige Abgabeelement (11), das zweite rohrförmige Abgabeelement (18) und das Ansaugelement (19) einen Verbrennungsblock (38) bilden, der eine mindestens teilweise nahtlose Seitenfläche (39) hat; wobei insbesondere das erste rohrförmige Abgabeelement (11), das zweite rohrförmige Abgabeelement (18) und das Ansaugelement (19) einen Verbrennungsblock (38) bilden, der in einem Stück, insbesondere aus Siliziumcarbid, hergestellt ist; wobei der Verbrennungsblock (38) mit dem Mischkörper (5) gekoppelt ist; wobei insbesondere das erste rohrförmige Abgabeelement (11) eine am zweiten Ende angeordnete Drossel hat; wobei die Drossel ermöglicht, dass das zweite Ende einen Durchmesser hat, der kleiner als 30 mm ist, insbesondere höchstens 25 mm beträgt;
wobei insbesondere das Ansaugelement (19) eine am zweiten Ende (14) angeordnete Drossel (40) hat; das Ansaugelement (19) mindestens ein kegelstumpfförmiges Teilstück (41) hat, das durch eine größere Basis (42) und eine kleinere Basis (43) begrenzt ist; das zweite rohrförmige Abgabeelement (18) ein erstes offenes Ende (44), das zum Ansaugelement (19) weist, und ein zweites offenes Ende (44) hat, das zur Innenseite der Brennkammer (3) weist;
wobei sich noch spezieller die Öffnungen (20) durch das Ansaugelement (19) erstrecken, sie beispielsweise eine längliche Form haben und längs zum ersten rohrförmigen Abgabeelement (11) und zum zweiten rohrförmigen Abgabeelement (18) angeordnet sind; die kleinere Basis (43) des kegelstumpfförmigen Teilstücks (41) mit der Drossel (40) zusammenfällt; die größere Basis (42) des kegelstumpfförmigen Teilstücks (41) mit dem ersten offenen Ende (44) zusammenfällt; und die Öffnungen (20) insbesondere auf dem kegelstumpfförmigen Teilstück (41) angeordnet sind;
wobei insbesondere die erste und zweite Verbrennungskammer (21, 22) so konfiguriert sind, dass sie die Flamme mit hoher Geschwindigkeit im ersten rohrförmigen Abgabeelement (11) und das Ansaugelement (19) durchlaufend zum zweiten rohrförmigen Abgabeelement (18) übertragen.

3. Brenner (1) nach Anspruch 2, wobei das Ansaugelement (19) so konfiguriert ist, dass es mindestens teilweise in der Brennkammer (3) angeordnet ist.

4. Brenner (1) nach Anspruch 1 oder 2,
wobei die erste Verbrennungskammer (21) eine erste Einlassöffnung (23) und eine erste Auslassöffnung (24) aufweist; wobei die erste Einlassöffnung (23) so konfiguriert ist, dass sie mit der Leitung (6) kommuniziert, um den Brennstoff zuzuführen und einen insbesondere variablen Volumenstrom des Brennstoffs (FL) aufzunehmen; die erste Auslassöffnung (24) zum zweiten rohrförmigen Abgabeelement (18) weist; die erste Verbrennungskammer (21) auch eine insbesondere zylindrische erste Seitenwand (25) aufweist, die mit einem oder mehreren ersten Oxidator- (OX) Zufuhrkanälen (26) versehen ist, die so konfiguriert sind, dass sie einen ersten Teil (OX') des Oxidators (OX) in der ersten Verbrennungskammer (21) übertragen, was ein erstes Oxidator- (OX) Brennstoff-Gemisch (M') erzeugt; die erste Verbrennungskammer (21) und die zweite Verbrennungskammer (22) insbesondere koaxial miteinander und entlang einer Längsachse (AA) des Brenners (1) angeordnet sind; und die ersten Oxidator- (OX) Zufuhrkanäle (26) insbesondere so konfiguriert sind, dass sie den ersten Teil (OX') des Oxidators (OX) in Entsprechung zur Auslösevorrichtung (8) übertragen.

5. Brenner (1) nach einem der vorstehenden Ansprüche, wobei die zweite Verbrennungskammer (22) eine zweite Einlassöffnung (27) und eine zweite Auslassöffnung (28) aufweist; wobei die zweite Einlassöffnung (27) so konfiguriert ist, dass sie mit der ersten Auslassöffnung (24) kommuniziert und das erste Oxidator-Brennstoff-Gemisch (M') aufnimmt; die zweite Auslassöffnung (28) zum zweiten rohrförmigen Abgabeelement (18) weist; die zweite Verbrennungskammer (22) auch eine zweite Seitenwand (29) mit einem im Wesentlichen kreisförmigen Querschnitt aufweist, der insbesondere zur zweiten Auslassöffnung (28) hin radial konvergiert; die zweite Verbrennungskammer (22) mit einem oder mehreren zweiten Oxidator-(OX) Zufuhrkanälen (30) versehen ist, die so konfiguriert sind, dass sie einen zweiten Teil (OX") des Oxidators (OX) in der zweiten Verbrennungskammer (22) übertragen, was zusammen mit dem ersten Oxidator-Brennstoff-Gemisch (M') ein zweites Oxidator-Brennstoff-Gemisch (M") erzeugt; die zweiten Oxidator- (OX) Zufuhrkanäle (30) insbesondere so hergestellt sind, dass der zweite Teil (OX") des Oxidators (OX) in die zweite Verbrennungskammer (22) mit einer Geschwindigkeit mit mindestens einer Tangentialkomponente im Hinblick auf eine Hauptrichtung des ersten Oxidator-Brennstoff-Gemischs (M') oder im Hinblick auf eine Längsachse (AA) des Brenners (1) eintreten kann;
wobei die zweite Seitenwand (29) der zweiten Verbrennungskammer (22) insbesondere eine Kegelstumpfform mit einer größeren Basis (31) und einer kleineren Basis (32) hat; wobei die größere Basis (31) an der zweiten Einlassöffnung (27) liegt, während die kleinere Basis (32) an der zweiten Auslassöffnung (28) angeordnet ist; und die zweiten Oxidator- (OX) Zufuhrkanäle (30) insbesondere so hergestellt sind, dass der zweite Teil (OX") des Oxidators (OX) in die zweite Verbrennungskammer (22) mit einer Geschwindigkeit im Wesentlichen parallel zur zweiten Seitenwand (29) der zweiten Verbrennungskammer (22) eintreten kann.

6. Brenner (1) nach einem der vorstehenden Ansprüche, der eine dritte Verbrennungskammer (33) aufweist, die stromabwärts von der zweiten Verbrennungskammer (22) liegt und mit einer dritten Einlassöffnung (34) und einer dritten Auslassöffnung (35) versehen ist; wobei die dritte Einlassöffnung (34) so konfiguriert ist, dass sie mit der zweiten Auslassöffnung (28) kommuniziert und das zweite Oxidator-Brennstoff-Gemisch (M") aufnimmt; die dritte Auslassöffnung (35) zum zweiten rohrförmigen Abgabeelement (18) weist; die dritte Verbrennungskammer (33) eine dritte Seitenwand (36) mit einem im Wesentlichen kreisförmigen, insbesondere zylindrischen Querschnitt aufweist und mit einem oder mehreren dritten Oxidator-(OX) Zufuhrkanälen (37) versehen ist, die so konfiguriert sind, dass ein dritter Teil (OX"') des Oxidators (OX) in die dritte Verbrennungskammer (33) eintreten kann, was zusammen mit dem zweiten Oxidator-Brennstoff-Gemisch (M") ein drittes Oxidator-Brennstoff-Gemisch (M"') erzeugt, das zum zweiten rohrförmigen Abgabeelement (18) übertragen wird.

7. Brenner (1) nach einem der vorstehenden Ansprüche, wobei die Auslösevorrichtung (8) und/oder die Flammendetektionsvorrichtung (9) eine längliche Form haben und im Mischkörper (5) entlang eines ersten Kanals (47) bzw. eines zweiten Kanals (48) eingeführt sind, die entlang der Achsen (AI, AR) im Hinblick auf eine Längsachse (AA) des Brenners (1) mindestens teilweise geneigt angeordnet sind; und die Flammendetektionsvorrichtung (9) insbesondere mindestens eine erste Verbrennungskammer (21) und eine zweite Verbrennungskammer (22) durchläuft und so konfiguriert ist, dass sie mindestens teilweise tangential zu einem Flammenpfeil angeordnet ist, d. h. der Form der Flamme bei Betrieb mit voller Auslastung.

8. Brenner (1) nach Anspruch 1,
wobei die Brennstoff-Zufuhrleitung (6) eine Düse zur Einleitung des Brennstoffs zur ersten Verbrennungskammer (21) aufweist, wobei die Düse ein Axialloch mit einem Durchmesser unter 20 mm, insbesondere unter 15 mm, noch spezieller von höchstens 13,5 mm hat;
wobei die Brennstoff-Einleitungsdüse insbesondere auf einem Verschlussboden des Brenners in einem Stück zusammen mit diesem gebildet ist.

9. Brenner (1) nach Anspruch 1,
wobei ein Oxidator-Verteilungselement entlang der Oxidator-Zufuhrleitung zur ersten Verbrennungskammer angeordnet ist, das Element mit mehreren Durchgangsöffnungen versehen ist, um den in die erste Verbrennungskammer strömenden Oxidator aufzuteilen; wobei die Öffnungen eine Breite haben, die unter 5 mm, insbesondere unter 4 mm liegt und vorzugsweise höchstens 3,5 mm beträgt;
wobei das Verteilungselement insbesondere mindestens drei, insbesondere mindestens vier Durchgangsöffnungen aufweist; und die Öffnungen insbesondere kreisförmige Löcher sind;
wobei die Flammendetektionsvorrichtung insbesondere eine UV-Sonde aufweist, die insbesondere entlang einer Längsachse des Brenners auf einem Verschlussboden des Mischkörpers eingebaut angeordnet ist.

10. Industrieanlage (55) zum Brennen von Keramikartikeln (T), die aufweist: einen Tunnelofen (2), der mit mindestens einer Seitenwand (56) versehen ist, die mindestens teilweise eine Brennkammer (3) begrenzt und eine Innenfläche (57) auf der Innenseite der Brennkammer (3) und eine Außenfläche (58) auf der Außenseite der Brennkammer (3) hat; ein Transportsystem (4), das so konfiguriert ist, dass es mehrere Keramikartikel (T) entlang eines Förderwegs (P) in der Brennkammer (3) bewegt;
wobei der Ofen (2) mindestens einen Brenner (1) nach einem der Ansprüche 1 bis 9 aufweist;
wobei die Industrieanlage (55) mindestens ein Wasserstoff-Zufuhrsystem aufweist, das so konfiguriert ist, dass es Wasserstoff oder ein Wasserstoff aufweisendes Gemisch in die Brennstoff-Zufuhrleitung einspritzt.

11. Anlage (55) nach Anspruch 10, die einen Brenner (1) nach Anspruch 2 aufweist, wobei das Ansaugelement (19) zwischen dem ersten rohrförmigen Abgabeelement (11) und dem zweiten rohrförmigen Abgabeelement (18) angeordnet und mindestens teilweise in der Brennkammer (3) angeordnet ist; das Ansaugelement (19) so konfiguriert ist, dass es mindestens einen Teil der in der Brennkammer (3) vorhandenen Gase (G, G') in das zweite rohrförmige Abgabeelement (18) führt; das Ansaugelement (19) insbesondere an der Innenfläche (57) der Seitenwand (56) angeordnet ist; das Ansaugelement (19) so konfiguriert ist, dass es einen negativen Partialdruck zwischen dem ersten Abgabeelement (11) und dem zweiten Abgabeelement (18) erzeugt, um mindestens einen Teil der in der Brennkammer (3) vorhandenen Gase (G, G') in das zweite Abgabeelement (18) zu führen; die Anlage (55) insbesondere mehrere Brenner (1) aufweist, die in Reihe entlang einer Richtung (DD) angeordnet sind, die parallel zum Förderweg (P) ist; der Brenner (1) insbesondere eine Längsachse (AA) hat, die quer (insbesondere senkrecht) zum Förderweg (P) ist, beispielsweise senkrecht zur Wand (56) des Industrieofens (2);
wobei sich das erste rohrförmige Abgabeelement (11) des mindestens einen Brenners (1) insbesondere mindestens teilweise (insbesondere insgesamt) durch die (insbesondere quer zur) Seitenwand (56) des Ofens (2) erstreckt; wobei das zweite rohrförmige Abgabeelement (18) des Brenners (1) im Wesentlichen koaxial im Hinblick auf das erste rohrförmige Abgabeelement (11) und im Wesentlichen vollständig in der Brennkammer (3) angeordnet ist.

12. Anlage (55) nach Anspruch 11,
wobei das erste rohrförmige Abgabeelement (11) des mindestens einen Brenners (1) so eingebaut ist, dass es in die Brennkammer (3) vorsteht.

13. Anlage (55) nach Anspruch 10 oder 11, die aufweist:
mindestens eine elektronische Steuereinheit, die so konfiguriert ist, dass sie den Brenner (1) steuert, um aus einer Brennkonfiguration mit Flamme in eine flammenlose Brennkonfiguration überzugehen; wobei die elektronische Steuereinheit insbesondere so konfiguriert ist, dass sie die Flamme löscht, indem sie die Zufuhr von Brennstoff und bei Bedarf des Oxidators reduziert, und die Zufuhr von Brennstoff und bei Bedarf des Oxidators wieder herstellt, damit der Brenner in einem flammenlosen Modus brennen kann; wobei die Anlage insbesondere mindestens zwei Temperatursteuervorrichtungen aufweist, insbesondere Doppelfaden-Thermoelemente, die an mindestens zwei unterschiedlichen Punkten des Tunnelofens angeordnet sind.

14. Verfahren zum Brennen von Keramikartikeln (T), die in einem Tunnelofen gefördert werden, das die Schritte aufweist:
Versorgen eines Brenners nach einem der Ansprüche 1 bis 9 mit einem Brennstoff, der mindestens einen prozentualen Anteil von Wasserstoff über 20 %, insbesondere über 50 %, noch spezieller über 70 % aufweist;
gleichzeitiges Versorgen des Brenners mit einem Oxidator und Zünden einer Flamme mindestens teilweise im Brenner und in einer Brennkammer des Tunnelofens; und
Feedbackregeln der Flamme.

15. Verfahren nach Anspruch 14, das, sobald die Brennkammer des Ofens eine bestimmte Temperatur erreicht hat, ferner die Schritte aufweist:
Löschen der Flamme durch Reduzieren der Zufuhr von Brennstoff und insbesondere des Oxidators; und
Wiederherstellen der Zufuhr von Brennstoff und insbesondere des Oxidators, was im Tunnelofen eine flammenlose Verbrennung erzeugt, die die Keramikartikel brennt.

## Revendications

1. Brûleur (1) pour la cuisson d'articles en céramique (T), qui peut être installé dans un four industriel (2) comprenant une chambre de cuisson (3) ;
le brûleur (1) comprenant : un corps de mélange (5) ; comprenant à son tour au moins un conduit (6) pour apporter un combustible (FL) comprenant un pourcentage d'hydrogène ; au moins un conduit (7) pour apporter un agent oxydant (OX) ; un dispositif déclencheur (8) pour démarrer une combustion ; un dispositif de détection de flamme (9) ; un premier élément de refoulement tubulaire (11), qui est configuré pour être traversé par un fluide (F) s'écoulant en sortie du corps de mélange (5) et est muni d'une première extrémité (12), à l'intérieur de laquelle au moins une partie du corps de mélange (5) est inséré, et d'une seconde extrémité (14), qui est opposée à la première extrémité (12) ;
le brûleur (1) étant **caractérisé en ce que** le corps de mélange (5) comprend une tête de combustion à étages multiples (10), qui est agencée au moins partiellement à l'intérieur du premier élément de refoulement tubulaire (11) ; dans lequel la tête de combustion à étages multiples (10) comprend au moins une première chambre de combustion (21), qui est configurée pour générer une première phase de combustion d'une flamme, et au moins une deuxième chambre de combustion (22), communiquant avec la première chambre de combustion (21) et qui est configurée pour générer une seconde phase de combustion de la flamme sortant de la première chambre de combustion (21) ; les première et deuxième chambres de combustion (21, 22) étant configurées pour acheminer la flamme à l'intérieur du premier élément de refoulement tubulaire (11) vers la seconde extrémité (14).

2. Brûleur (1) selon la revendication 1, comprenant au moins un second élément de refoulement tubulaire (18), qui s'étend à partir de la seconde extrémité (14) sur le côté opposé par rapport à la première extrémité (12) ; et un élément d'aspiration (19), qui est configuré pour amener au moins une partie des gaz (G, G') présents à l'extérieur du brûleur (1) jusque dans le second élément de refoulement tubulaire (18) et est muni d'une ou de plusieurs ouvertures (20) agencées entre les premier (11) et second (18) éléments de refoulement tubulaires ; en particulier, dans lequel le premier élément de refoulement tubulaire (11) est coaxial au second élément de refoulement tubulaire (18) et à la tête de combustion à étages multiples (10) ; en particulier, le premier élément de refoulement tubulaire (11), le second élément de refoulement tubulaire (18) et l'élément d'aspiration (19) forment un bloc de combustion (38), qui possède une surface latérale (39) au moins partiellement sans soudure ;
en particulier, dans lequel le premier élément de refoulement tubulaire (11), le second élément de refoulement tubulaire (18) et l'élément d'aspiration (19) forment un bloc de combustion (38) fabriqué d'un seul tenant, en particulier constitué de carbure de silicium ; le bloc de combustion (38) étant couplé au corps de mélange (5) ;
en particulier, dans lequel le premier élément de refoulement tubulaire (11) possède un étranglement agencé à la seconde extrémité ; l'étranglement permettant à la seconde extrémité de posséder un diamètre qui est inférieur à 30 mm, en particulier égal ou inférieur à 25 mm ;
en particulier, dans lequel l'élément d'aspiration (19) possède un étranglement (40) agencé à la seconde extrémité (14) ; l'élément d'aspiration (19) possède au moins une section de forme tronconique (41), qui est délimitée par une base plus grande (42) et une base plus petite (43) ; le second élément de refoulement tubulaire (18) possède une première extrémité ouverte (44), faisant face à l'élément d'aspiration (19), et une seconde extrémité ouverte (44) faisant face à l'intérieur de la chambre de cuisson (3) ;
plus particulièrement, dans lequel les ouvertures (20) s'étendent à travers l'élément d'aspiration (19), par exemple, elles possèdent une forme allongée et sont agencées longitudinalement par rapport au premier élément de refoulement tubulaire (11) et au second élément de refoulement tubulaire (18) ;
la base plus petite (43) de la section de forme tronconique (41) coïncide avec l'étranglement (40) ; la base plus grande (42) de la section de forme tronconique (41) coïncide avec la première extrémité ouverte (44) ; en particulier, les ouvertures (20) sont agencées sur la section de forme tronconique (41) ;
en particulier, les première et deuxième chambres de combustion (21, 22) étant configurées pour acheminer la flamme à haute vitesse à l'intérieur du premier élément de refoulement tubulaire (11) et, en transversant l'élément d'aspiration (19), vers le second élément de refoulement tubulaire (18).

3. Brûleur (1) selon la revendication 2, dans lequel l'élément d'aspiration (19) est configuré pour être agencé, au moins partiellement, à l'intérieur de la chambre de cuisson (3).

4. Brûleur (1) selon la revendication 1 ou 2, dans lequel la première chambre de combustion (21) comprend une première ouverture d'entrée (23) et une première ouverture de sortie (24) ; la première ouverture d'entrée (23) étant configurée pour communiquer avec le conduit (6) pour apporter le combustible et pour recevoir un débit volumétrique, en particulier variable, dudit combustible (FL) ; la première ouverture de sortie (24) faisant face au second élément de refoulement tubulaire (18) ;
la première chambre de combustion (21) comprenant également une première paroi latérale (25), en particulier cylindrique, munie d'un ou de plusieurs premiers canaux (26) d'apport d'agent oxydant (OX), qui sont configurés pour acheminer une première partie (OX') de l'agent oxydant (OX) à l'intérieur de la première chambre de combustion (21), ce qui génère un premier mélange (M') agent oxydant (OX) - combustible ; en particulier, la première chambre de combustion (21) et la deuxième chambre de combustion (22) sont coaxiales l'une avec l'autre et agencées le long d'un axe longitudinal (AA) du brûleur (1) ; en particulier, les premiers canaux (26) d'apport d'agent oxydant (OX) sont configurés pour acheminer la première partie (OX') de l'agent oxydant (OX) en correspondance du dispositif déclencheur (8).

5. Brûleur (1) selon l'une quelconque des revendications précédentes, dans lequel la deuxième chambre de combustion (22) comprend une deuxième ouverture d'entrée (27) et une deuxième ouverture de sortie (28) ; la deuxième ouverture d'entrée (27) étant configurée pour communiquer avec la première ouverture de sortie (24) et pour recevoir le premier mélange (M') agent oxydant - combustible ; la deuxième ouverture de sortie (28) faisant face au second élément de refoulement tubulaire (18) ; la deuxième chambre de combustion (22) comprenant également une deuxième paroi latérale (29) ayant une section transversale sensiblement circulaire, en particulier convergeant radialement vers la deuxième ouverture de sortie (28) ; la deuxième chambre de combustion (22) étant munie d'un ou de plusieurs deuxièmes canaux (30) d'apport d'agent oxydant (OX), qui sont configurés pour acheminer une deuxième partie (OX") de l'agent oxydant (OX) à l'intérieur de la deuxième chambre de combustion (22) ce qui génère, conjointement avec le premier mélange (M') agent oxydant - combustible, un deuxième mélange (M") agent oxydant - combustible ; en particulier, les deuxièmes canaux (30) d'apport d'agent oxydant (OX) sont constitués de manière à permettre à la deuxième partie (OX") de l'agent oxydant (OX) d'entrer dans la deuxième chambre de combustion (22) avec une vélocité ayant au moins une composante tangentielle par rapport à une direction principale du premier mélange (M') agent oxydant - combustible, ou par rapport à un axe longitudinal (AA) du brûleur (1) ;
en particulier, dans lequel la deuxième paroi latérale (29) de la deuxième chambre de combustion (22) possède une forme tronconique comprenant une base plus grande (31) et une base plus petite (32) ; dans lequel la base plus grande (31) est au niveau de la deuxième ouverture d'entrée (27), tandis que la base plus petite (32) est agencée au niveau de la deuxième ouverture de sortie (28) ; en particulier, les deuxièmes canaux (30) d'apport d'agent oxydant (OX) sont constitués de manière à permettre à la deuxième partie (OX'') de l'agent oxydant (OX) d'entrer dans la deuxième chambre de combustion (22) avec une vélocité sensiblement parallèle à la deuxième paroi latérale (29) de la deuxième chambre de combustion (22).

6. Brûleur (1) selon l'une quelconque des revendications précédentes et comprenant une troisième chambre de combustion (33) située en aval de la deuxième chambre de combustion (22) et munie d'une troisième ouverture d'entrée (34) et d'une troisième ouverture de sortie (35) ;
la troisième ouverture d'entrée (34) étant configurée pour communiquer avec la deuxième ouverture de sortie (28) et pour recevoir le deuxième mélange (M") agent oxydant - combustible ; la troisième ouverture de sortie (35) faisant face au second élément de refoulement tubulaire (18) ; la troisième chambre de combustion (33) comprenant une troisième paroi latérale (36) ayant une section transversale sensiblement circulaire, en particulier cylindrique, et munie d'un ou de plusieurs troisièmes canaux (37) d'apport d'agent oxydant (OX), qui sont configurés pour permettre à une troisième partie (OX‴) de l'agent oxydant (OX) d'entrer dans la troisième chambre de combustion (33) ce qui génère, conjointement avec le deuxième mélange (M") agent oxydant - combustible, un troisième mélange (M‴) agent oxydant - combustible, qui est acheminé vers le second élément de refoulement tubulaire (18).

7. Brûleur (1) selon l'une quelconque des revendications précédentes, dans lequel le dispositif déclencheur (8) et/ou le dispositif de détection de flamme (9) possèdent une forme allongée et sont insérés à l'intérieur du corps de mélange (5) respectivement le long d'un premier canal (47) et d'un second canal (48) agencés le long des axes (AI, AR) au moins partiellement inclinés par rapport à un axe longitudinal (AA) du brûleur (1) ; en particulier, le dispositif de détection de flamme (9) traverse au moins une première chambre de combustion (21) et une deuxième chambre de combustion (22) et est configuré pour être agencé au moins partiellement tangent à une pointe de flamme, à savoir à la forme de la flamme lors d'un fonctionnement à pleine capacité.

8. Brûleur (1) selon la revendication 1,
dans lequel le conduit d'apport de combustible (6) comprend une buse pour l'introduction du combustible vers la première chambre de combustion (21), ladite buse ayant un trou axial doté d'un diamètre inférieur à 20 mm, en particulier inférieur à 15 mm, plus particulièrement inférieur ou égal à 13,5 mm ;
en particulier, dans lequel la buse d'introduction de combustible est obtenue sur une culasse du brûleur d'un seul tenant conjointement avec cette dernière.

9. Brûleur (1) selon la revendication 1,
dans lequel un élément de distribution d'agent oxydant est agencé le long du conduit d'apport d'agent oxydant, vers la première chambre de combustion, l'élément est muni d'une pluralité d'ouvertures traversantes pour diviser l'agent oxydant s'écoulant dans la première chambre de combustion ;
dans lequel lesdites ouvertures possèdent une largeur qui est inférieure à 5 mm, en particulier inférieure à 4 mm, de préférence inférieure ou égale à 3,5 mm ;
en particulier, dans lequel l'élément de distribution comprend au moins trois, en particulier au moins quatre ouvertures traversantes ; en particulier, lesdites ouvertures sont des trous circulaires ;
en particulier, dans lequel le dispositif de détection de flamme comprend une sonde UV, plus particulièrement agencée le long d'un axe longitudinal du brûleur à bord d'une culasse du corps de mélange.

10. Appareil industriel (55) pour la cuisson d'articles en céramique (T) comprenant : un four tunnel (2) muni d'au moins une paroi latérale (56), qui délimite au moins partiellement une chambre de cuisson (3) et possède une surface interne (57) sur l'intérieur de la chambre de cuisson (3) et une surface externe (58) sur l'extérieur de la chambre de cuisson (3) ; un système de transport (4), qui est configuré pour déplacer une pluralité d'articles en céramique (T) le long d'un chemin d'acheminement (P) à l'intérieur de la chambre de cuisson (3) ;
dans lequel le four (2) comprend au moins un brûleur (1) selon l'une quelconque des revendications 1 à 9 ; l'appareil industriel (55) comprenant au moins un système d'apport d'hydrogène, qui est configuré pour injecter de l'hydrogène ou un mélange comprenant de l'hydrogène dans le conduit d'apport de combustible.

11. Appareil (55) selon la revendication 10, comprenant un brûleur (1) selon la revendication 2, dans lequel l'élément d'aspiration (19) est agencé entre le premier élément de refoulement tubulaire (11) et le second élément de refoulement tubulaire (18) et est, au moins partiellement, agencé à l'intérieur de la chambre de cuisson (3) ; l'élément d'aspiration (19) est configuré pour amener au moins une partie des gaz (G, G') présents dans la chambre de cuisson (3) jusque dans le second élément de refoulement tubulaire (18) ; en particulier, l'élément d'aspiration (19) est agencé au niveau de la surface interne (57) de la paroi latérale (56) ; l'élément d'aspiration (19) est configuré pour créer une pression partielle négative entre le premier élément de refoulement (11) et le second élément de refoulement (18) de façon à amener au moins une partie des gaz (G, G') présents dans la chambre de cuisson (3) jusque dans le second élément de refoulement (18) ; en particulier, l'appareil (55) comprend une pluralité de brûleurs (1) agencés en série le long d'une direction (DD) qui est parallèle au chemin d'acheminement (P) ; en particulier, ledit brûleur (1) possède un axe longitudinal (AA) qui est transversal (en particulier, perpendiculaire) au chemin d'acheminement (P), par exemple perpendiculaire à ladite paroi (56) du four industriel (2);
en particulier, dans lequel le premier élément de refoulement tubulaire (11) de l'au moins un brûleur (1) s'étend au moins partiellement (en particulier, totalement) à travers (en particulier, transversalement à) la paroi latérale (56) du four (2) ; le second élément de refoulement tubulaire (18) du brûleur (1) étant sensiblement coaxial par rapport au premier élément de refoulement tubulaire (11) et étant sensiblement complètement agencé à l'intérieur de la chambre de cuisson (3).

12. Appareil (55) selon l'une quelconque de la revendication 11,
dans lequel le premier élément de refoulement tubulaire (11) de l'au moins un brûleur (1) est installé de façon à faire partiellement saillie dans la chambre de cuisson (3).

13. Appareil (55) selon la revendication 10 ou 11 et comprenant au moins une unité de commande électronique, qui est configurée pour commander le brûleur (1) de façon à passer d'une configuration de cuisson avec flamme à une configuration de cuisson sans flamme ; en particulier, l'unité de commande électronique étant configurée pour éteindre la flamme par la réduction de l'apport de combustible et, si nécessaire, de l'agent oxydant et pour rétablir l'apport de combustible et, si nécessaire, de l'agent oxydant, ce qui permet au brûleur de cuire en mode sans flamme ; en particulier, l'appareil comprend au moins deux dispositifs de commande de température, en particulier des thermocouples à double filament, agencés à au moins deux points différents du four tunnel.

14. Procédé pour la cuisson d'articles en céramique (T) acheminés à l'intérieur d'un four tunnel et comprenant les étapes de :
- l'apport, à un brûleur selon l'une quelconque des revendications 1 à 9, d'un combustible comprenant au moins un pourcentage d'hydrogène supérieur à 20 %, en particulier supérieur à 50 %, plus particulièrement supérieur à 70 % ;
- simultanément, l'apport, audit brûleur, d'un agent oxydant et l'allumage d'une flamme au moins partiellement à l'intérieur du brûleur et d'une chambre de cuisson du four tunnel ;
- la commande de ladite flamme en rétroaction.

15. Procédé selon la revendication 14 et comprenant, une fois que la chambre de cuisson du four a atteint une certaine température, les étapes supplémentaires de :
- l'extinction de la flamme par la réduction de l'apport de combustible et, en particulier, de l'agent oxydant ; et
- le rétablissement de l'apport de combustible et, en particulier, de l'agent oxydant, ce qui génère, à l'intérieur du four tunnel, une combustion sans flamme qui cuit les articles en céramique.
